# EUROPÄISCHE PATENTSCHRIFT

(11) **EP 0 993 902 B1**
(45) Veröffentlichungstag und Bekanntmachung des Hinweises auf die Patenterteilung: **01.09.2004**
(21) Anmeldenummer: 99120559.2
(22) Anmeldetag: 15.10.1999
(51) Int. Cl.: B23P 19/06, F16B 37/06

(54) **Verfahren zur Anbringung eines Funktionselementes, Matrize, Funktionselement, Zusammenbauteil**
Method for attaching a functional element, die, functional element and mounting assembly
Procédé pour attacher un élément fonctionnel, matrice, élément fonctionnel et ensemble de montage

(30) Priorität: 16.10.1998 DE 19847838; 30.07.1999 DE 19935923; 13.10.1999 EP 99120400
(43) Veröffentlichungstag der Anmeldung: 19.04.2000
(60) Teilanmeldung: 04006557.5
(73) Patentinhaber: Profil Verbindungstechnik GmbH & Co. KG, 61381 Friedrichsdorf (DE)
(72) Erfinder: Humpert, Richard, Dr., 61276 Weilrod (DE); Babey, Jiri, 35423 Lich (DE); Diehl, Oliver, 61350 Bad Homburg (DE)
(74) Vertreter: Manitz, Finsterwald & Partner GbR

(56) Entgegenhaltungen:
- EP-A- 0 171 348
- EP-A- 0 842 733
- GB-A- 1 532 437
- US-A- 5 339 509
- US-A- 5 528 815

## Beschreibung

Die Erfindung betrifft ein Verfahren zur Anbringung eines Funktionselementes, insbesondere eines Befestigungselementes, an einem Blechteil, ggf. in flüssigkeits- und/oder gasdichter Form gemäß dem Oberbegriff vom Anspruch 1 sowie eine Matrize gemäß dem Oberbegriff vom Anspruch 9.

Funktionselemente, die auch als Funktionsträger bezeichnet werden, wie beispielsweise Muttern und Bolzen, werden z.B. im Automobilbau an Blechteilen angebracht, um die verschiedensten Bauteile mit den Blechteilen verbinden zu können.

Aus der DE 196 47 831 A1 ist ein Verfahren zur Anbringung eines Funktionselementes an einem Blechteil bekannt, bei dem mittels einer einteiligen Umformmatrize, gegen die das Funktionselement unter Zwischenlage des Blechteils gepreßt wird, Blechmaterial mit einem Hinterschneidungsmerkmal des Funktionselementes verhakt wird.

Des weiteren ist es bekannt, Bleche ohne Verwendung zusätzlicher Verbindungselemente dadurch miteinander zu verbinden, daß die Bleche auf eine Matrize gedrückt und mittels eines Stempels in Richtung eines feststehenden Ambosses gezogen werden. Bewegliche Lamellen der Matrize, die seitlich des Ambosses angeordnet sind, geben nach und bewegen sich radial nach außen, wenn das untere Blechteil den Amboß erreicht. Dadurch entsteht ein die Bleche miteinander verriegelnder runder Kragen.

Ein Verfahren bzw. eine Matrize der eingangs genannten Art ist aus der US-A-5,339,509 bekannt.

Bei der US-A-5,339, 509 sind die Formteile der Matrize bei der Ausbildung der Vertiefung im Blechteil geschlossen und bewegen sich am Ende der Schließbewegung der Presse unter dem Druck des Blechmaterials nach außen, während dieses und/oder das Kopfteil des Elements verquetscht wird. Dadurch entstehen die Hinterschneidung im Kopfteil des Funktionselements und das Eingreifen des Blechmaterials in diese Hinterschneidung.

Aufgabe der Erfindung ist es, ein Verfahren der eingangs genannten Art sowie eine Matrize der eingangs genannten Art zu schaffen, die eine möglichst einfach herstellbare und gute Verbindung zwischen einem Blechteil und einem Funktionselement gewährleisten.

Gelöst wird diese Aufgabe nach der Erfindung verfahrensmäßig dadurch, dass das Blechmaterial mittels des beweglich gelagerten Formteils der Matrize bzw. der beweglichen Formteile der Matrize in die Hinterschneidung des Funktionselementes gedrückt wird, wobei zumindest ein Eingriffsabschnitt des Formteils zum Hineindrücken von Blechmaterial in die Hinterschneidung mit einer Radialkomponente senkrecht auf eine Längsachse der Matrize zu bewegt wird.

Die erfindungsgemäße Matrize zeichnet sich dadurch aus, dass das Formteil bzw. die Formteile zum Hineindrücken von Blechmaterial in eine Hinterschneidung eines ggf. flüssigkeits- und/oder gasdicht an einem Blechteil anzubringenden Funktionselementes, insbesondere eines Befestigungselementes, durch eine Bewegung auf die Längsachse der Matrize zu während einer Schließbewegung der Matrize ausgebildet ist bzw. sind.

Bei der vorliegenden Erfindung kommt also eine Matrize mit beweglichen Matrizenteilen zur Verwendung, bei denen die so genannten Formteile beim Schließen der Presse von einer geöffneten Position in eine geschlossene Position bewegt werden und dabei Blechmaterial in Richtung auf die Längsachse des Funktionselements zu drücken. D.h., dass die Formteile während der Anbringung des Funktionselements auf das Blechteil eine Schließbewegung in Richtung auf die Längsachse des Funktionselements zu ausführen und diese Schließbewegung wird ausgenützt, um das Blechmaterial in entsprechende Hinterschneidungen des Funktionselements zu drücken.

Erfindungsgemäß erfolgt die Anbringung des Funktionselementes an dem Blechteil durch umformtechnisches Fügen, wobei durch das erfindungsgemäße Vorsehen eines beweglich gelagerten Formteils der Matrize, das in der Lage ist, Blechmaterial in eine Hinterschneidung des Funktionselementes zu drücken, es nicht notwendig ist, das Funktionselement und/oder die Matrize mit komplizierten Strukturen zu versehen, die für ein formschlüssiges Verbinden oder Verhaken des Funktionselementes mit dem Blechteil sorgen.

Hierdurch können die Funktionselemente, die entweder in an sich bekannter Weise durch Kaltschlagen der durch andere preisgünstige Verfahren hergestellt werden, und/oder die Matrizen kostengünstig hergestellt werden.

Die Erfindung ermöglicht es des weiteren, das beweglich gelagerte Formteil der Matrize in Abhängigkeit von der Ausgestaltung des Funktionselementes, insbesondere von der Ausführung und/oder der Lage der Hinterschneidung des Funktionselementes, gezielt derart auszubilden und anzuordnen, daß zum einen die Matrize möglichst einfach aufgebaut sein kann und zum anderen nur die für den jeweiligen Anwendungszweck erforderliche Menge an Blechmaterial in die Hinterschneidung gedrückt wird.

Darüber hinaus kann erfindungsgemäß das beweglich gelagerte Formteil als ein separates Bauteil ausgebildet werden, welches z.B. zur Anpassung an unterschiedliche Funktionselemente oder aufgrund von Verschleiß ausgewechselt werden kann, ohne daß die gesamte Matrize ausgetauscht werden muß.

Gemäß einer bevorzugten Ausführungsform der Erfindung wird das Blechteil zumindest im Bereich des Funktionselementes bei dessen Anbringung am Blechteil weder perforiert noch gelocht.

Hierdurch ist das Blechteil auch im Anschluß an das Anbringen des Funktionselementes nach wie vor absolut flüssigkeits- und/oder gasdicht und kann daher auch in Umgebungen, in denen derartige Eigenschaften unverzichtbar sind, eingesetzt werden.

Gemäß einer weiteren bevorzugten Ausführungsform der Erfindung wird das Formteil mittels des zur Anbringung am Blechteil in Richtung einer Längsachse der Matrize bewegten Funktionselementes bewegt.

Hierdurch ist weder ein separater Antrieb für das Formteil noch eine Steuereinrichtung erforderlich, die für den richtigen Ablauf der Bewegung des Formteils sorgt. Die Erfindung schafft vielmehr ein automatisches, selbststeuerndes Verfahren, das die Anbringung des Funktionselementes am Blechteil erheblich vereinfacht.

Gemäß einem weiteren bevorzugten Ausführungsbeispiel der Erfindung wird das Blechmaterial erst in die Hinterschneidung gedrückt und bevorzugt mit Verdrehsicherungsmerkmalen in Eingriff gebracht, nachdem das Blechteil durch das zur Anbringung am Blechteil in Richtung einer Längsachse der Matrize bewegte Funktionselement zumindest teilweise umgeformt, insbesondere mit einer etwa kragen- oder topfförmigen Ausformung versehen worden ist.

Hierdurch wird es ermöglicht, das Blechteil beispielsweise durch ein Kopfteil des gegen das Blechteil gepressten Funktionselementes umzuformen, um eine Vertiefung im Blechteil für das Funktionselement auszubilden. Mittels des beweglich gelagerten Formteils der Matrize kann dann Blechmaterial in die beispielsweise am Kopfteil und/oder im Bereich des Übergangs vom Kopfteil zu einem Schaftteil des Funktionselementes ausgebildete Hinterschneidung gedrückt werden. Auf diese Weise wird das Kopfteil des Funktionselementes von Blechmaterial zumindest teilweise derart umschlossen, daß eine formschlüssige, zur Übertragung von in axialer Richtung wirkenden Kräften ausreichend feste Verbindung zwischen dem Funktionselement und dem Blechteil geschaffen wird.

Weitere bevorzugte Ausführungsformen des erfindungsgemäßen Verfahrens sowie der erfindungsgemäßen Matrize sind in den Ansprüchen, der Beschreibung sowie der Zeichnung angegeben.

Die Erfindung wird im folgenden anhand von Ausführungsbeispielen unter Bezugnahme auf die Zeichnung beschrieben. Es zeigen:
- Fig. 1a: eine Ausführungsform eines Funktionselementes, das mittels des erfindungsgemäßen Verfahrens an einem Blechteil anbringbar ist, in einer teilweise geschnittenen Seitenansicht,
- Fig. 1b: das Funktionselement von Fig. 1a in einer Querschnittsansicht entlang der Linie I-I,
- Fig. 1c: eine schematische Darstellung eines Blechteils
- Fig. 2a: eine Ausführungsform einer Matrize zur Durchführung des erfindungsgemäßen Verfahrens in einer geschnittenen Seitenansicht,
- Fig. 2b: die Matrize von Fig. 2a in einer Draufsicht,
- Fig. 2c: eine bevorzugte Variante der Matrize der Fig. 2a,
- Fig. 2d: die Matrize von Fig. 2c in einer Draufsicht,
- Fig. 3a: eine weitere Ausführungsform einer Matrize zur Durchführung des erfindungsgemäßen Verfahrens in einer geschnittenen Seitenansicht, die in einem links und einem rechts einer Längsachse dargestellten Bereich gleichzeitig zwei unterschiedliche Betriebsstellungen der Matrize zeigt,
- Fig. 3b: die Matrize von Fig. 3a in einer Draufsicht,
- Fig. 3c: eine bevorzugte Variante der Matrize der Fig. 3a,
- Fig. 3d: die Matrize der Fig. 3a in einer Draufsicht
- Fig. 3e: eine schematische Darstellung der Verwendung der Matrize der Fig. 3a zur Anbringung eines als Gewindestift realisierten Funktionselements, in einer Ausgangsposition gezeigt,
- Fig. 3f: die Vorrichtung der Fig. 3e in der Endposition gezeigt,
- Fig. 3g: das fertige Zusammenbauteil aus der Vorrichtung der Fig. 3f entnommen,
- Fig. 4a: das Funktionselement von Fig. 1a und 1b in einem an einem Blechteil angebrachten Zustand,
- Fig. 4b: eine Draufsicht auf das aus dem Funktionselement und dem Blechteil bestehenden Zusammenbauteil gemäß Fig. 4a,
- Fig. 4c: eine Draufsicht auf ein Mutterelement ähnlich dem Kopfteil des Funktionselements der Fig. 1a und 1b in einer Darstellung entsprechend Fig. 1a,
- Fig. 4d: das Element der Fig. 4c in Seitenansicht auf der linken Seite der mittleren Längsachse und in radialem Schnitt auf der rechten Seite dieser Achse,
- Fig. 4e: das Element der Fig. 4c und 4d in in einem Blechteil eingebrachten Zustand,
- Fig. 5: ein erfindungsgemäß als Gewindestift ausgebildetes Funktionselement vor der Anbringung an einem Blechteil,
- Fig. 6a: das als Gewindestift ausgebildete Funktionselement von Fig. 5 im am Blechteil angebrachten Zustand,
- Fig. 6b: ein an einem Blechteil angebrachtes, als Gewindestift gemäß einer weiteren Ausführungsform ausgebildetes Funktionselement,
- Fig. 7: eine teilweise geschnittenen Längsansicht eines erfindungsgemäß bevorzugten Elementes und unter dem Element ein schematisch dargestelltes Blechteil,
- Fig. 8: das Element der Figur 7 und das Blechteil nach der Anbringung des Elementes am Blechteil,
- Fig. 9: eine in Längsrichtung geschnittene Ansicht einer Matrize zur Durchführung der Verbindung gemäß Figur 8, wobei die Matrize rechts der mittleren Längsachse im geöffneten Ausgangszustand und links von der mittleren Achse im geschloßenen Endzustand des Fügeverfahrens gezeigt ist,
- Fig. 10: eine Draufsicht auf die Matrize der Figur 9 in Pfeilrichtung X gesehen, wobei sämtliche Teile der Matrize im Ausgangszustand am Anfang des Fügeverfahrens gezeigt sind,
- Fig. 11a-k: eine Reihenfolge von Zeichnungen, welche verschiedene Stadien des Fügeverfahrens darstellen und jeweils eine in Längsrichtung geschnittene Ansicht durch das in einem Setzkopf angeordnete Funktionselement und die Matrize gemäß Figur 9 zeigen,
- Fig. 12a: ein weiteres, rohrförmiges Funktionselement, das nach der Erfindung mit einem Blechteil vernietet werden kann,
- Fig. 12b: eine mögliche Blechverarbeitung, die mit dem Element der Fig. 12a oder der Fig. 7 verwendet werden kann,
- Fig. 13: eine in Längsrichtung geschnittene Matrize ähnlich der der Fig. 9 zur Anbringung des Funktionselements der Fig. 12a oder der Fig. 7 an dem vorbereiteten Blechteil der Fig. 12b,
- Fig. 14: eine Seitenansicht der Matrize der Fig. 9,
- Fig. 15: eine teilweise in Längsrichtung geschnittene Darstellung des Elementes der Fig. 12a nach der Anbringung am Blechteil der Fig. 12b,
- Fig. 16: eine schematische Darstellung der Matrize der Fig. 13 und 14 nach Herstellung des Zusammenbauteils der Fig. 15 und mit einer Darstellung des verwendeten Setzkopfes, und
- Fig. 17a - e: eine Zeichnungsreihe zur Darstellung einer anderen Möglichkeit der Anbringung eines als Gewindestift ausgebildeten Elements an ein Blechteil.

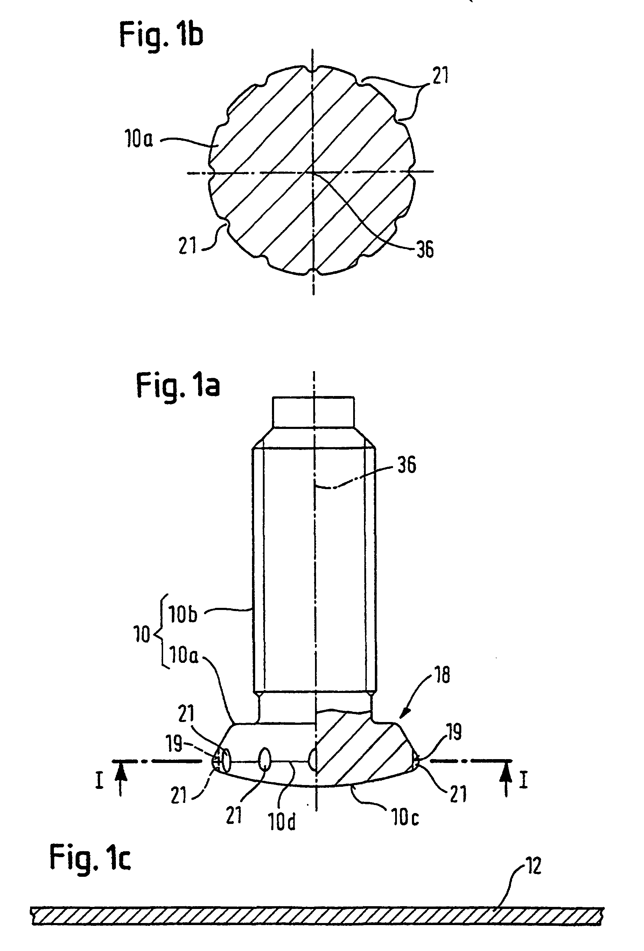

Das Funktionselement 10 gemäß Fig. 1a, das zur Anbringung an ein Blechteil 12 gemäß Fig. 1c gedacht ist, umfaßt ein Kopfteil 10a und ein im wesentlichen zylindrisches Schaftteil 10b, welches an einer ebenen, senkrecht zu einer Längsachse 36 verlaufenden Oberseite des Kopfteils 10a einstückig mit dem Kopfteil 10a verbunden ist und mit einem Gewinde versehen ist. Grundsätzlich kann das Schaftteil 10b in Abhängigkeit von der jeweiligen Funktion, die das Funktionselement 10 zu erfüllen hat, beliebig ausgeführt sein. Beispielsweise kann das Schaftteil 10b auch - abweichend von Fig. 1a - gewindefrei und lediglich als glatter Bolzen ausgebildet sein und als Lagerzapfen für drehbar zu lagernde Bauteile dienen. Des weiteren kann das freie Ende des Schaftteils 10b auch zur Verrastung mit beispielsweise aufklippsbaren Verbindungsteilen ausgebildet sein.

Die vom Schaftteil 10b abgewandte Unterseite 10c des Kopfteils 10a ist leicht konvex gekrümmt. Ausgehend von einem Bereich 10d maximalen Durchmessers verjüngt sich das Kopfteil 10a in Richtung des Schaftteils 10b, so daß der Querschnitt des Kopfteils 10a in einer die Längsachse 36 enthaltenen Ebene näherungsweise die Form eines Trapezes aufweist.

Der gesamte Übergangsbereich zwischen dem Bereich 10d maximalen Durchmessers des Kopfteils 10a und dem Schaftteil 10b des Funktionselementes 10, d.h. sowohl der schräg auf die Längsachse 36 zu verlaufende als auch der sich daran anschließende, senkrecht zur Längsachse 36 verlaufende Oberflächenbereich, stellt eine Hinterschneidung 18 im Sinne der Erfindung dar, mit der - bei entsprechender Ausbildung einer Matrize - Blechmaterial eines Blechteils, an dem das Funktionselement 10 in erfindungsgemäßer Weise angebracht werden soll, in Eingriff gebracht werden kann.

In der Umfangswand des Kopfteils 10a sind mehrere, in Umfangsrichtung gleichmäßig verteilt angeordnete Aussparungen 21 ausgebildet, die zur Aufnahme von Blechmaterial eines Blechteils und somit als Verdrehsicherungsmerkmale dienen und für eine drehfeste Verbindung des Funktions-elementes 10 mit dem Blechteil sorgen.

Die Aussparungen 21 besitzen - wie in dem linken, nicht geschnittenen Teil von Fig. 1a zu erkennen ist - an der Umfangswand des Kopfteils 10a eine ovale Umrißform und - wie aus Fig. 1b hervorgeht - verjüngen sich in Richtung der Längsachse 36. Insbesondere aus dem rechten, geschnittenen Teil von Fig. 1a ist zu ersehen, daß die Aussparungen 21 an ihrer in radialer Richtung tiefsten Stelle jeweils eine Linie 19 bilden, die der Längsachse 36 am nächsten gelegen ist und jeweils parallel zu dieser verläuft, wobei die Begrenzungslinie 19 der Aussparung 21 im linkesten Teil von Fig. 1a durch eine gestrichelte Linie angedeutet ist.

Die Form der Aussparungen 21 ergibt sich durch die Ausbildung von Längsnuten, die in die Mantelfläche des Funktionselementes eingebracht werden und beispielsweise in einem Kaltschlag- oder Walzverfahren erzeugt werden können. Die Längsachsen dieser Längsnuten oder Aussparungen 21, die in der Ausführungsform gemäß Fig. 1a parallel zur Längsachse 36 des Funktionselementes 10 verlaufen, können grundsätzlich jede beliebige Orientierung bezüglich der Längsachse 36 aufweisen.

Fig. 1b zeigt, daß die Tiefe der Aussparungen 21 im Vergleich zum Durchmesser des Kopfteils 10a des Funktionselementes 10 klein ist. Grundsätzlich kann jedoch in Abhängigkeit vom jeweiligen Anwendungszweck beispielsweise die Anzahl, die Art und Weise der Anordnung, die konkrete Ausbildung sowie insbesondere die radiale Tiefe sowie die Form der Aussparungen 21 variiert werden.

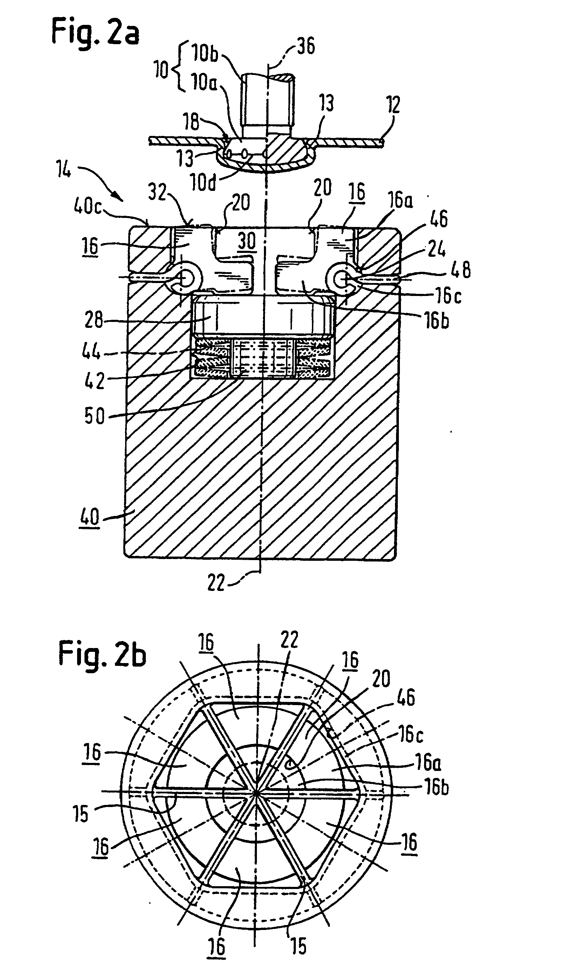

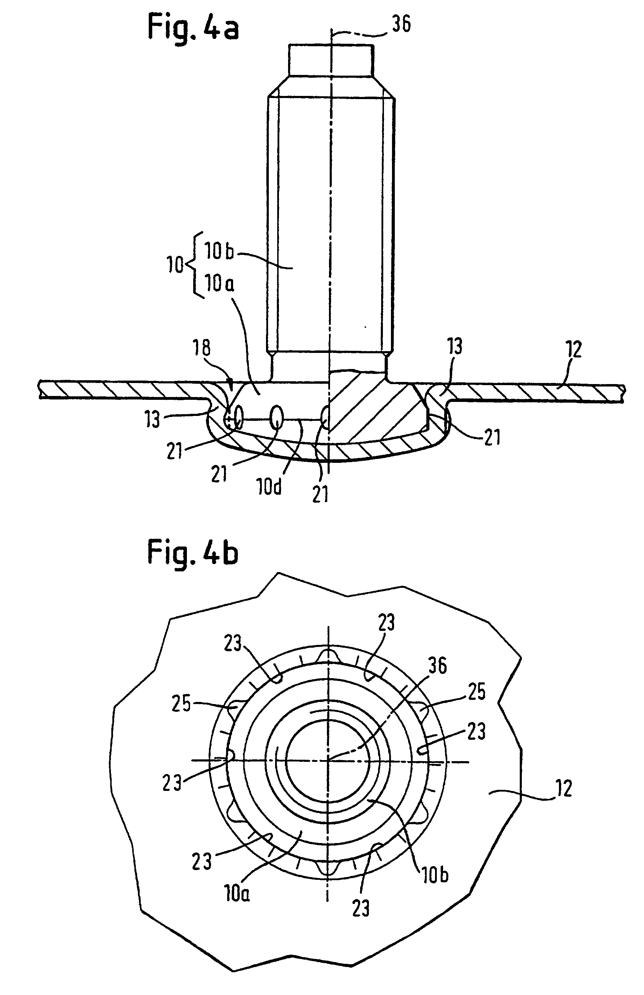

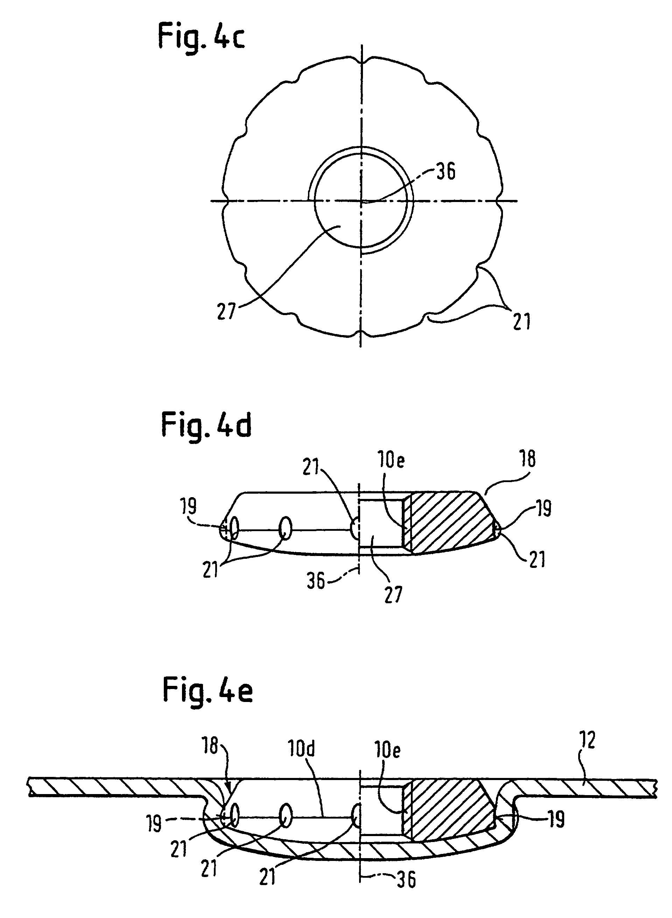

Die Fig. 2a und 2b zeigen eine Ausführungsform einer eine Längsachse 22 aufweisenden Matrize 14. In Fig. 2a ist oberhalb der Matrize 14 teilweise das bereits an einem Blechteil 12 angebrachte Funktionselement 10 dargestellt. Das Funktionselement 10 und das Blechteil 12 bilden in diesem Zustand ein Zusammenbauteil, das mittels der nachfolgend beschriebenen Matrize 14 herstellbar und vergrößert in Fig. 4 gezeigt ist.

Die Matrize 14 gemäß Fig. 2a und 2b umfaßt einen Block 40, in welchem eine gestufte Vertiefung 42 ausgebildet ist. In dem unteren, eine kleinere freie innere Querschnittsfläche aufweisenden Bereich der Vertiefung 42 ist ein auf einem Federorgan 44 ruhendes, platten- oder scheibenförmiges Stützelement 28 angeordnet, das sich über das Federorgan 44 am Boden der Vertiefung 42 abstützt. Durch ein Anschlagelement 50 ist eine maximale Eintauchtiefe des Stützelementes 28 festgelegt. Das Federorgan 44 umfaßt bevorzugt eine oder mehrere Tellerfedern, kann jedoch auch als elastisch verformbarer Block, z. B. aus Polyurethan, oder anderweitig ausgeführt sein.

In dem oberen, eine größere freie innere Querschnittsfläche aufweisenden Bereich der Vertiefung 42 sind - wie aus Fig. 2a hervorgeht - sechs baugleiche Formteile 16 angeordnet, die in einer Ebene senkrecht zur Längsachse 22 jeweils einen näherungsweise dreieckigen Querschnitt aufweisen und tortenstückartig um die Längsachse 22 herum angeordnet sind.

Jedes Formteil 16 ist als drehbar gelagerter Hebel ausgebildet und umfaßt einen etwa senkrecht zur Längsachse 22 verlaufenden Betätigungsarm 16b, über den es mit dem Stützelement 28 zusammenwirken kann, sowie einen etwa parallel zur Längsachse 22 verlaufenden Eingriffsarm 16a, dessen freies Ende an einem der Längsachse 22 zugewandten Bereich einen wulstartigen Vorsprung 20 aufweist, der dazu dient, in einer noch zu beschreibenden Weise Blechmaterial 13 des Blechteils 12 in eine Hinterschneidung 18 des Funktionselementes 10 zu drücken.

Die der Längsachse 22 zugewandten Seiten der Eingriffsarme 16a und die vom Stützelement 28 wegweisenden Seiten der Betätigungsarme 16b begrenzen einen im wesentlichen zylindrischen Umformraum 30 der Matrize 14.

Im Übergangsbereich zwischen der Rückseite des Eingriffsarmes 16a und der Unterseite des Betätigungsarmes 16b ist jedes Formteil 16 mit einem Ausschnitt 16c etwa in Form eines Halbzylinders versehen, über den das Formteil 16 mit beispielsweise aus Draht oder Blech gefertigten Halteelementen 48 in Eingriff steht, deren freie Enden jeweils zu einer zu dem Ausschnitt 16c komplementären Form gebogen sind.

Das die Ausschnitte 16c begrenzende Material der Formteile 16 erstreckt sich über einen Winkelbereich von mehr als 180°, so daß die gebogenen und seitlich in die Ausschnitte 16c geschobenen freien Enden der Halteelemente 48 nicht in Längsrichtung der Halteelemente 48 aus den Formteilen 16 herausgezogen werden können.

Die freien Enden der Halteelemente 48 dienen somit als jeweils eine Drehachse 24 für das Formteil festlegende Lagerbereiche 46, auf denen die Formteile 16 jeweils drehbar gelagert sind.

Des weiteren sind die Halteelemente 48 derart mit der Matrize 14 in deren die Formteile 16 jeweils umgebendem Bereich verbunden, daß die Drehachsen 24 der Formteile 16 jeweils in einem definierten, festen Abstand zur Längsachse 22 der Matrize 14 gehalten werden und so verhindert wird, daß sich die Formteile 16 auf die Längsachse 22 zu verschieben.

Die Formteile 16 sind folglich jeweils um die Drehachse 24 drehbar, die senkrecht zur Längsachse 22 der Matrize 14 im Bereich des Ausschnitts 16c und des den Lagerbereich 46 bildenden gebogenen freien Endes des Halteelementes 48 verläuft.

In Fig. 2b sind insbesondere die in Höhe der Ausschnitte 16c jeweils etwa den Querschnitt eines gleichseitigen Dreiecks aufweisenden, nach Art von Tortenstücken um die Längsachse 22 der Matrize 14 herum angeordneten Formteile 16 zu erkennen, deren Betätigungsarme 16b in Richtung der Längsachse 22 spitz zulaufen. Die Eingriffsarme 16a der Formteile 16 sind um die Längsachse 22 der Matrize herum gekrümmt, um den zylindrischen Umformraum 30 zu bilden. Die jeweils am freien Ende der Eingriffs-arme 16a ausgebildeten Vorsprünge 20 liegen somit auf einem Kreis um die Längsachse 22. Zwischen jeweils zwei einander zugewandten Seiten der Formteile 16 ist ein spaltartiger Zwischenraum 15 vorhanden.

Mittels der erfindungsgemäßen Matrize 14 in der Ausführungsform gemäß Fig. 2a und 2b wird ein Funktionselement 10 an einem Blechteil 12 gemäß dem erfindungsgemäßen Verfahren wie folgt angebracht:

In einer in Fig. 2a strichpunktiert dargestellten Ausgangsstellung sind die Formteile 16 jeweils durch das von unten gegen die Betätigungsarme 16b drückende Stützelement 28 derart um ihre Drehachse 24 verdreht, daß jeweils die Eingriffsarme 16a im Bereich ihres freien Endes an der Begrenzungswand der Vertiefung 42 anliegen und die nach oben weisende Stirnseite der Formteile 16 leicht schräg zu der senkrecht zur Längsachse 22 verlaufenden Stirnseite des die Vertiefung 42 begrenzenden Bereiches der Matrize 14 verläuft.

Nachdem ein ebenes Blechteil 12 auf die Matrize 14 gelegt worden ist, wird ein von einem nicht dargestellten Setzkopf gehaltenes Funktionselement 10 von oben gegen das Blechteil 12 gepreßt, das daraufhin in den Umformraum 30 gedrückt und topfartig umgeformt wird.

Das Drehmoment, das durch die Kräfte, die über das an den - eine Auflagefläche 32 bildenden - Stirnseiten der Eingriffsarme 16a anliegende Blechteil 12 auf die Formteile 16 einwirken, auf die Formteile 16 jeweils ausgeübt wird, reicht zum Verdrehen der Formteile 16 nicht aus, da diese Kräfte zum einen teilweise von den Lagerbereichen 46, an denen sich die Formteile 16 abstützen, aufgenommen und zum anderen teilweise durch das in die entgegengesetzte Richtung auf die Formteile 16 einwirkende Stützelement 28 zumindest kompensiert werden

Die Formteile 16 werden folglich erst dann aufgrund eines ausreichend hohen Drehmoments in die in Fig. 2a in durchgezogenen Linien dargestellte Endstellung verkippt, wenn das Funktionselement 10 so weit in den Umformraum 30 hineinbewegt worden ist, daß es unter Zwischenlage des Blechteils 12 die Betätigungsarme 16b beaufschlagt und gegen die Rückstellkraft des Federorgans 44 des Stützelementes 28 nach unten drückt.

Die freien Enden der Eingriffsarme 16a werden daraufhin in Richtung der Längsachse 22 bewegt, so daß sie mit dem das Kopfteil 10a des Funktionselementes 10 umgebenden Blechmaterial 13 des Blechteils 12 in Eingriff gelangen und somit das Blechmaterial 13 gegen die Umfangswand des Kopfteils 10a und in die darin ausgebildeten Aussparungen 21 drücken.

Die jeweils am freien Ende der Eingriffsarme 16a ausgebildeten Vorsprünge 20 sorgen zusätzlich dafür, daß Blechmaterial 13 gegen den schräg auf die Längsachse 36 zu verlaufenden Oberflächenbereich des Kopfteils 10a und somit - von der Unterseite des Kopfteils 10a aus gesehen - hinter den Bereich 10d maximalen Durchmessers und auf diese Weise in die Hinterschneidung 18 gedrückt wird.

Während des letzten Teils der Abwärtsbewegung des Funktionselementes 10 in Richtung der Längsachse 22, d.h. bis zum Anschlag des Stützelementes 28 am Anschlagelement 50, wird somit das Blechteil 12 weiter umgeformt und gleichzeitig das Kopfteil 10a formschlüssig mit dem Blechteil 12 derart verbunden bzw. verhakt, daß das Funktionselement 10 aufgrund der Aussparungen 21 verdrehsicher und aufgrund der Hinterschneidung 18 in axialer Richtung fest an dem Blechteil angebracht ist.

In Fig. 2a oberhalb der Matrize 14 und - vergrößert - in Fig. 4 ist teilweise das auf die vorstehend beschriebene Weise hergestellte Zusammenbauteil, d.h. das Funktionselement 10 im am Blechteil 12 angebrachten und aus dem Umformraum 30 der Matrize 14 herausgenommenen Zustand dargestellt, in dem der Kopfteil 10a in einer durch den Umformvorgang hervorgerufenen topfartigen Vertiefung des Blechteils 12 angeordnet ist, wobei das mittels der Vorsprünge 20 der Formteile 16 in die Hinterschneidungen 18 gedrückte Blechmaterial 13 den Bereich 10d maximalen Durchmessers umgreift und auf diese Weise das Funktionselement 10 am Blechteil 12 festhält.

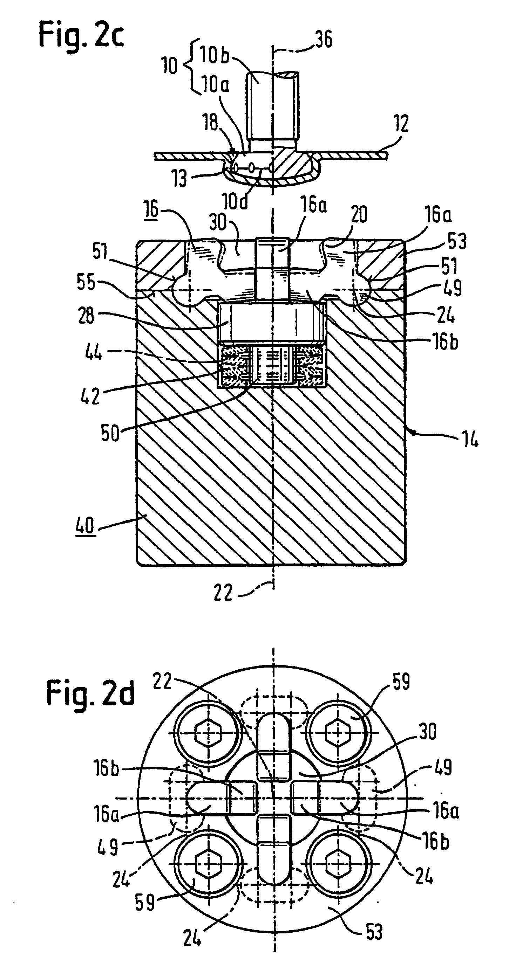

Die Fig. 2c und 2d zeigen die in der Praxis bevorzugte Ausführung der Matrize der Fig. 2a und 2b. Teile in der Ausführungsform der Fig. 2c und 2d, welche Teilen der Matrize der Fig. 2a und 2b entsprechen, sind mit den gleichen Bezugszeichen gekennzeichnet. Die Beschreibung der entsprechenden Bauteile mit Bezug auf die Fig. 2a und 2b gilt auch für diese bevorzugte Ausführungsform gemäß Fig. 2c und 2d, sofern nichts gegenteiliges gesagt wird.

Im Unterschied zu der Matrize der Fig. 2a und 2b zeichnet sich die Matrize gemäß Fig. 2c und 2d dadurch aus, daß anstelle von sechs Formteilen 16 hier lediglich vier vorhanden sind, wobei das Prinzip auch mit weniger Formteilen realisierbar wäre.

Anstatt getrennte Halteelemente 48 zu verwenden, sind die Formteile 16 der Ausführungsform gemäß Fig. 2c und 2d mit teilzylindrischen Bereichen 49 ausgestattet, die in entsprechende teilzylindrische Aufnahmen 51 der Matrize 14 untergebracht sind. Der Körperteil 40 der Matrize 14 ist in der Ausführungsform gemäß Fig. 2c und 2d mit einer Abdeckkappe 53 versehen, die über eine Trennfläche 55 mit dem unteren Teil 40 der Matrize 14 mittels Schrauben 59 (nur in Fig. 2d zu sehen) verbunden ist, wobei ein Teil der teilzylindrischen Ausnehmung 51 zur schwenkbaren Lagerung der Formteile 16 im unteren Teil 40 der Matrize und ein Teil in der damit mittels der vier jeweils zwischen zwei benachbarten Formteilen angeordneten Schrauben 59 verschraubten Platte 53 ausgebildet ist. Die winkelmäßige Ausdehnung der Ausnehmung 51 um die jeweilige Schwenkachse 24 der jeweiligen Formteile 16 herum beträgt etwas mehr als 180°, so daß die Formteile 16 formschlüssig gehalten werden zwischen der Platte 53 und dem unteren Teil 40 der Matrize 14. Diese Ausführung ist einerseits leichter herzustellen als die Ausführung gemäß Fig. 2a und 2b und darüber hinaus auch stabiler.

Die oben angegebene Funktionsbeschreibung zur Ausführungsform gemäß Fig. 2a und 2b gilt genauso für die Ausführungsform gemäß Fig. 2c und 2d. Der einzige Unterschied liegt darin, daß der Umformraum 30 bei der Ausführungsform gemäß Fig. 2c und 2d nicht von allen Seiten durch die Formteile 16 gebildet wird, so daß das Blechteil nicht um den gesamten Umfang des Kopfteils 10a des Funktionselements 10 in die Hinterschneidung 18 gedrückt wird, sondern hauptsächlich an den vier Stellen, an denen die Eingriffsarme 16a zur Anwendung gelangen. Dies reicht aber vollkommen aus, um eine hochwertige formschlüssige Verbindung im Bereich der Hinterschneidung 18 an den entsprechenden Stellen zu erzeugen, zumal das Blechmaterial auch in den Bereichen zwischen den Eingriffsarmen 16a gewissermaßen mit in die Hinterschneidung 18 hineingezogen wird.

Es soll nochmals betont werden, daß, obwohl die symmetrische Anordnung mit vier Eingriffsarmen die bevorzugte Ausführungsform darstellt, es durchaus auch möglich wäre, nur drei oder zwei Eingriffsarme oder sogar nur einen Eingriffsarm vorzusehen.

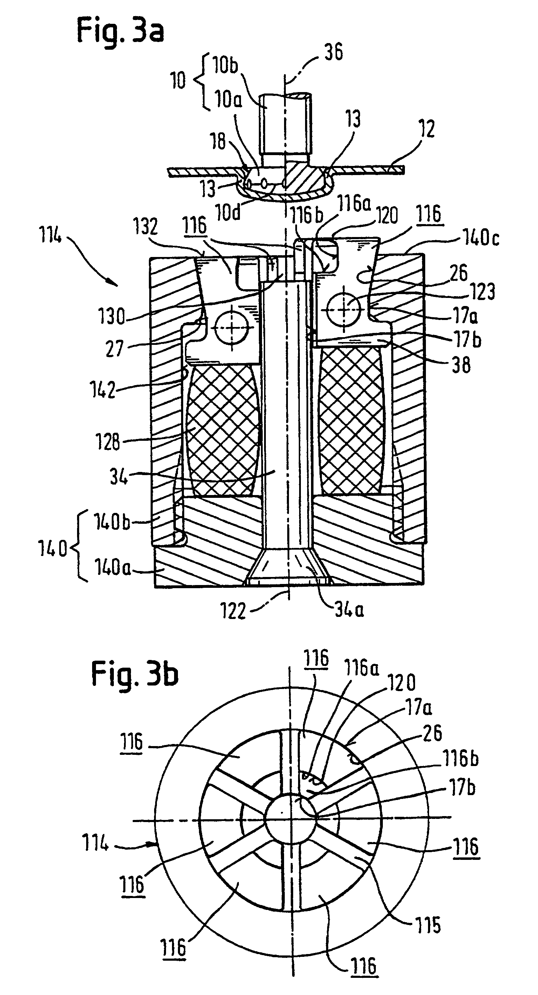

Die Matrize 114 gemäß der in den Fig. 3a und 3b dargestellten Ausführungsform der Erfindung weist im Unterschied zu der anhand der Fig. 2a und 2b beschriebenen Ausführungsform in axialer Richtung verschiebbare Formteile 116 auf, die in einer in einem zweiteilig ausgeführten Block 140 ausgebildeten Vertiefung 142 - wie Fig. 3b zeigt - nach Art von Tortenstücken um ein zylindrisches Anschlagelement 34 der Matrize 114 herum verteilt angeordnet sind. Zwischen den Formteilen 116 sind spalt-artige Zwischenräume 115 vorgesehen. Der Block 140 umfaßt ein Bodenteil 140a und ein Wandteil 140b, die miteinander verschraubt sind oder auf andere Art und Weise zum Zusammensetzen und Zerlegen der Matrize 114 lösbar miteinander verbunden werden können.

Die obere Stirnseite des Anschlagelementes 34, dessen Längsachse mit der Längsachse 122 der Matrize 114 zusammenfällt, bildet den zentralen Teil des Bodens eines im übrigen von den Formteilen 116 begrenzten, im wesentlichen zylindrischen Umformraumes 130. Ein kegelstumpfförmiger Fußabschnitt 34a des Anschlagelementes 34 ist in einer entsprechend geformten Vertiefung im Bodenteil 40a des Blocks 40 der Matrize 114 angeordnet, so daß das Anschlagelement 34 nur so weit von unten in die Vertiefung 142 eingeführt werden kann, bis die untere Stirnseite des Anschlagelementes 34 gemäß Fig. 3a bündig mit der Unterseite des Bodenteils 40a abschließt.

Die Formteile 116 umfassen jeweils eine senkrecht zur Längsachse 122 verlaufende Betätigungsfläche 116b und eine parallel zur Längsachse 122 verlaufende Eingriffsfläche 116a, die zusammen mit der oberen Stirnseite des Anschlagelementes 34 den Umformraum 130 begrenzen. Im Bereich des oberen freien Endes der Formteile 116 sind die Eingriffsflächen 116a jeweils mit einem der Längsachse 122 zugewandten wulstartigen Vorsprung 120 versehen, mit dem in einer noch zu beschreibenden Weise Blechmaterial 13 des Blechteils 12 in eine Hinterschneidung 18 des Funktionselementes 10 gedrückt werden kann.

Ausgehend von einer eine Auflagefläche 132 für ein Blechteil 12 bildenden Stirnseite der Matrize 114 verjüngt sich die Vertiefung 142 zunächst derart, daß deren Begrenzungswand konisch auf die Längsachse 122 zu verläuft und eine Formfläche 26 bildet, um sich dann zu einem zylindrischen Bereich mit zur Längsachse 122 paralleler Begrenzungswand zu erweitern, so daß eine Ringstufe 27 vorhanden ist.

Die Formteile 116 liegen jeweils mit einer vom Anschlagelement 34 abgewandten Außenfläche 17a an der schräg auf das Anschlagelement 34 zu verlaufenden Formfläche 26 an und sind mit einer senkrecht zur Längsachse 122 der Matrize 114 verlaufenden Unterseite an einem Stützelement 128 abgestützt. Das beispielsweise aus Polyurethan hergestellte Stützelement 128 ist elastisch verformbar und als das Anschlagelement 34 umgebender, einteiliger Hohlzylinder ausgebildet.

Eine Innenfläche 17b jedes Formteils 116 verläuft parallel zur Längsachse 122 der Matrize 114 und somit parallel zur Außenwand des Anschlagelementes 34.

Im Bereich des Übergangs zwischen ihrer Unterseite und ihrer von der Längsachse 122 abgewandten Rückseite sind die Formteile 116 jeweils mit einer Ringschulter 38 versehen, mit der die Formteile 116 in einer Ausgangsstellung, die im rechten Teil von Fig. 3a gezeigt ist, jeweils durch das Stützelement 128 gegen die Ringstufe 27 im Übergangsbereich zwischen dem zylindrischen und dem konischen Bereich der Vertiefung 142 gedrückt werden.

In dieser Ausgangsstellung sind die Innenflächen 17b der Formteile 116 jeweils vom Anschlagelement 34 beabstandet, während in einer Endstellung, die im linken Teil von Fig. 3a gezeigt ist, die Innenflächen 17b der gegen die Rückstellkraft des zusammengedrückten Stützelementes 128 in Richtung des Bodenteils 40a bewegten Formteile 116 jeweils an der Außenwand des Anschlagelementes 34 anliegen.

In Fig. 3b sind die Formteile 116 in einer Endstellung gemäß dem linken Teil von Fig. 3a mit an der Außenwand des Anschlagelementes 34 anliegenden Innenflächen 17b gezeigt.

Gemäß dem erfindungsgemäßen Verfahren wird ein Funktionselement 10 an einem Blechteil 12 mittels der erfindungsgemäßen Matrize 114 in der Ausführungsform gemäß den Fig. 3a und 3b wie folgt angebracht:

Zunächst wird ein ebenes Blechteil 12 auf die Auflagefläche 132 der Matrize 114 gelegt, die durch die Stirnseiten der in der Ausgangsstellung gemäß dem rechten Teil von Fig. 3a befindlichen Formteile 116 gebildet wird. Ein von einem nicht dargestellten Setzkopf gehaltenes Funktionselement 10 wird anschließend von oben gegen das Blechteil 12 gepreßt, um dieses in den Umformraum 130 zu drücken und topfartig umzuformen.

Wenn das Funktionselement 10 so weit in den Umformraum 130 eingeführt worden ist, daß es unter Zwischenlage des Blechteils 12 mit den Betätigungsflächen 116b der Formteile 116 in Kontakt gelangt und die Formteile 116 dadurch gegen die Rückstellkraft des Stützelementes 128 nach unten drückt, rutschen die Formteile 116 mit ihren Außenflächen 17a an der schrägen Formfläche 26 entlang, und zwar gleichzeitig nach unten und auf das Anschlagelement 34 zu, bis die Innenflächen 17b der Formteile 116 an der Außenwand des Anschlagelementes 34 zur Anlage kommen.

Dabei wird das durch den Umformvorgang bereits das Kopfteil 10a des Funktionselementes 10 umgebende Blechmaterial 13 des Blechteils 12 gegen die Umfangswand des Kopfteils 10a und in die darin ausgebildeten Aussparungen 21 gedrückt.

Die jeweils an den Eingriffsflächen 116a ausgebildeten Vorsprünge 120 der Formteile 116 drücken während des letzten Teils der Abwärtsbewegung des Funktionselementes 10 zusätzlich Blechmaterial 13 gegen den schräg auf die Längsachse 36 zu verlaufenden Oberflächenbereich des Kopfteils 10a und somit - von der Unterseite 10c des Kopfteils 10a aus gesehen - hinter den Bereich 10d maximalen Durchmessers, d.h. in die Hinterschneidung 18 des Funktionselementes 10.

Folglich ist das Funktionselement 10 formschlüssig mit dem Blechteil 12 verbunden bzw. verhakt und aufgrund der Aussparungen 21 verdrehsicher sowie aufgrund der Hinterschneidung 18 in axialer Richtung fest am Blechteil 12 angebracht. Auf die vorstehend beschriebene Weise wird somit ein teilweise in Fig. 3a oberhalb der Matrize 114 sowie - vergrößert - in Fig. 4a gezeigtes Zusammenbauteil hergestellt.

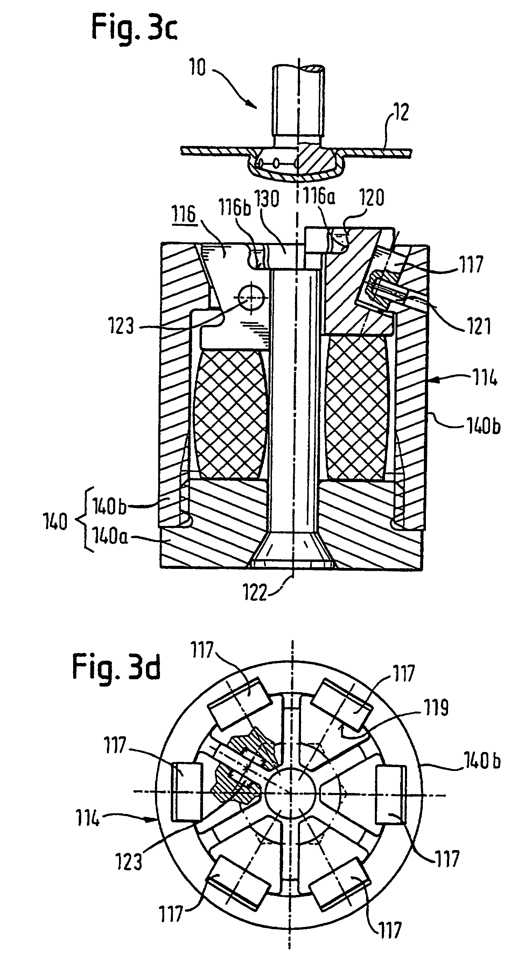

Die Fig. 3c und 3d zeigen die in der Praxis bevorzugte Ausführung der Matrize der Fig. 3a und 3b. Teile in der Ausführungsform der Fig. 3c und 3d, welche Teilen der Matrize der Fig. 3a und 3b entsprechen, sind mit den gleichen Bezugszeichen gekennzeichnet. Die Beschreibung der entsprechenden Bauteile mit Bezug auf die Fig. 3a und 3b gilt auch für diese bevorzugte Ausführungsform gemäß Fig. 3c und 3d, sofern nichts gegenteiliges gesagt wird.

Die Unterschiede zwischen der bevorzugten Matrize 114 der Fig. 3c und 3d und der sehr ähnlichen Matrize der Fig. 3a und 3b liegt im wesentlichen in der Detailanordnung und -führung der Formteile 116.

Während bei der Ausführungsform gemäß Fig. 3a und 3b die Formteile 116 an einer konusförmigen Formfläche 26 bei der Umformbewegung des Blechteils entlangrutschen, wird für jedes Formteil 116 der Ausführungsform gemäß Fig. 3c und 3d ein getrenntes gehärtetes Führungselement 117 vorgesehen, das in einer entsprechend bearbeiteten Ausnehmung 119 des jeweiligen Formteils 116 angeordnet ist und mittels eines Gewindestifts 121 gegenüber dem oberen Teil 140b der Matrize befestigt ist. Durch die formangepaßte Aufnahme des Führungsblocks 117 in dem jeweiligen Formteil 116 ist die Winkelstellung des jeweiligen Formteils 116 um die mittlere Längsachse 122 der Matrize 114 eindeutig festgelegt, so daß keine Verklemmungen im Betrieb eintreten dürften.

Diese stabile Führung der einzelnen Formteile 116 sorgt auch für eindeutige Verhältnisse im Bereich der jeweiligen Synchronisierungsstifte 123, die zylinderförmig ausgebildet sind und in entsprechenden, einander gegenüberliegenden Teilaufnahmen jeweils zwei benachbarte Formteile 116 angeordnet sind. Die insgesamt sechs vorgesehenen Synchronisierungsstifte 123 stellen sicher, daß alle sechs Formteile 116 sich gleichzeitig und synchronisiert in Achsrichtung 122 bewegen und verhindern somit ein unerwünschtes Verkanten des Elementes oder des Blechteils während des Umformvorganges.

Auch hier soll zum Ausdruck gebracht werden, daß das Vorsehen von sechs Formteilen 116 nicht zwangsläufig erforderlich ist. Die Konstruktion könnte genauso gut mit vier oder drei oder weniger Formteilen 116 realisiert werden.

Die Funktionsbeschreibung der Matrize der Fig. 3a und 3b gilt genauso für die bevorzugte Ausführungsform gemäß Fig. 3c und 3d, was durch die Anwendung der entsprechenden Bezugszeichen in den jeweiligen Figuren zum Ausdruck kommt.

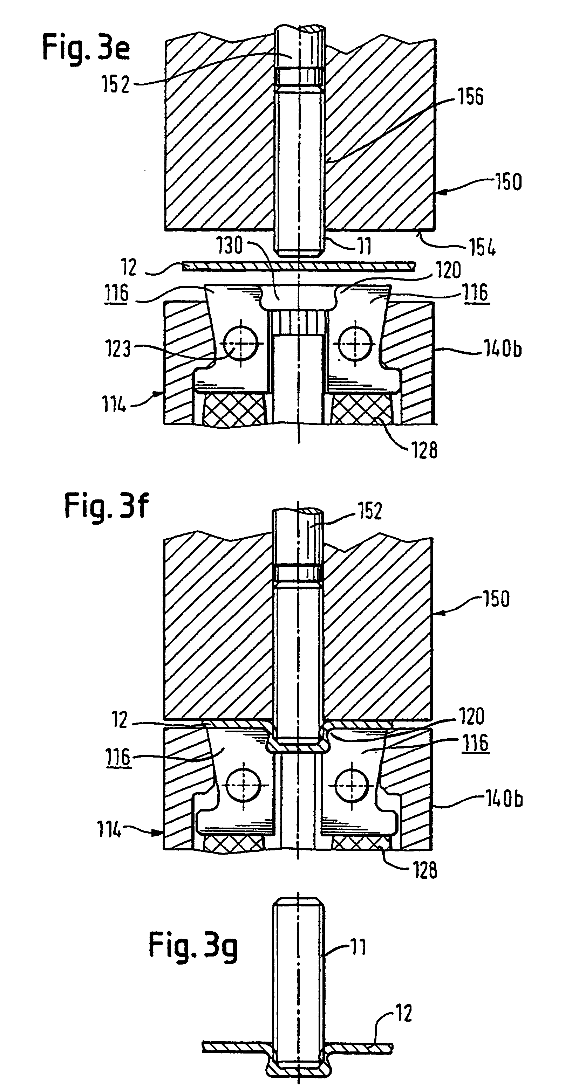

Die Fig. 3e, 3f und 3g zeigen im übrigen die Anwendung einer Matrize entsprechend den Fig. 3a und 3b für die Anbringung eines Funktionselements in Form eines Gewindestiftes ohne jegliche besondere Kopfform. Hiermit wird einerseits der Funktionsablauf mit einer Matrize entsprechend der Fig. 3a und 3b bzw. 3c und 3d nochmals verdeutlicht, andererseits aber auch zum Ausdruck gebracht, daß diese Matrize mit verschiedenen Funktionselementen verwendet werden kann und nicht auf die Anwendung mit einem Funktionselement entsprechend der Fig. 1a und 1b beschränkt ist.

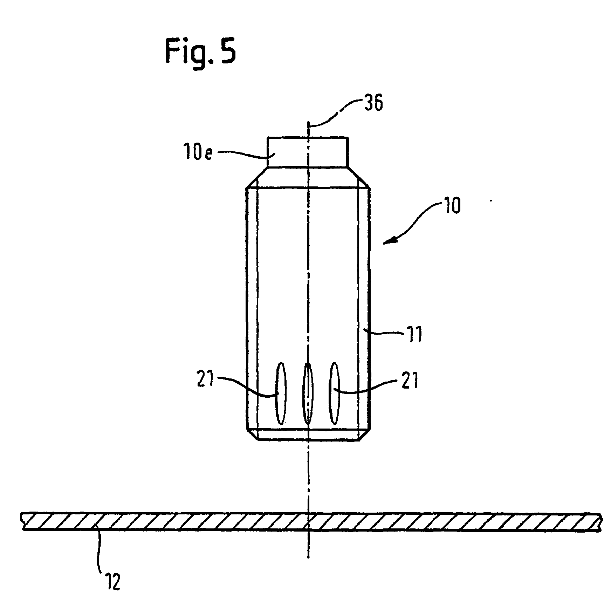

Wie bereits erwähnt ist das Funktionselement bei der Ausführungsform gemäß Fig. 3e bis 3g ein Gewindestift, beispielsweise derart wie in Fig. 5 gezeigt. Dieses Funktionselement hat den besonderen Vorteil, daß es äußerst preisgünstig, beispielsweise durch einen kontinuierlich ablaufenden Walzvorgang aus Stangen- oder Drahtmaterial, hergestellt werden kann. Das Funktionselement besteht ja hier schließlich nur aus einem zylindrischen Teil mit Gewinde, wobei wahlweise der Gewindestift an einem Ende, beispielsweise am freien Ende in Fig. 3g, mit einem Bund 10e, und am unteren Ende in Fig. 3g gegebenenfalls mit Merkmalen wie 21 in Fig. 5 zur Erzeugung einer Verdrehsicherung versehen werden kann, wobei diese Formmerkmale im Rahmen eines kontinuierlichen Walzverfahrens erzeugt werden können.

Im Grunde genommen ist das Einsetzverfahren gemäß Fig. 3a und 3f bereits detailliert angegeben im Zusammenhang mit der Arbeitsweise der Matrize der Fig. 3a und 3b. Es wird hier lediglich zur Verdeutlichung klargestellt, daß es sich bei dem Teil 150 um einen Setzkopf mit Stempel 152 handelt, wobei der Setzkopf 150 eine als Blechniederhalter wirkende Stirnseite 154 und einen mittleren Kanal 156 zur Aufnahme des Gewindestifts und zur Führung des Stempels 152 aufweist. Der Setzkopf 150 befindet sich beispielsweise an einer Zwischenplatte einer Presse oder am oberen Werkzeug der Presse, während sich die Matrize 114 im unteren Werkzeug bzw. in der Zwischenplatte befindet. Auch umgekehrte Anordnungen sind möglich, d.h. mit der Matrize 114 oberhalb des Setzkopfes 150, so daß dann beispielsweise die Matrize 114 am oberen Werkzeug der Presse oder an einer Zwischenplatte der Presse befestigt werden könnte, während der Setzkopf 150 dann an der Zwischenplatte bzw. im unteren Werkzeug der Presse anzuordnen wäre. Auch können der Setzkopf und die Matrize 114 außerhalb einer Presse eingesetzt werden, beispielsweise können sie von einem Roboter aus betätigt werden.

Im Zustand gemäß Fig. 3e ist die gedachte Presse geöffnet, so daß das Blechteil 12 zwischen dem Stirnende der Matrize 114 und dem unteren Stirnende des Gewindestiftes 11 eingebracht werden kann. Beim Schließen der Presse wird das Stirnende 154 des Setzkopfes 150 zunächst gegen das Blechteil 12 gedrückt, so daß dieses an die obere Stirnseite der Formteile 116 gepreßt und unverrückbar gehalten wird. Bei der weiteren Schließbewegung der Presse drücken nunmehr der Stempel 152 das untere Stirnende des Gewindestiftes 11 in Fig. 3e gegen das Blechteil 12 und formt diese in den Umformraum 130 hinein, zunächst ohne daß die Formteile 116 gegenüber der Matrize 114 zurückweichen. Wenn aber das Stirnende des Gewindestiftes 11 das Blechteil 12 gegen den Betätigungsflächen 116b der Formteile 116 drückt, werden diese von der Stellung in Fig. 3e in die Stellung Fig. 3f gedrückt, d.h. die Formteile 116 weichen nunmehr gegenüber dem Körper 140 der Matrize 114 zurück. Die Vorsprünge 120 drücken das Blechmaterial in das die Hinterschneidung bildende Gewinde des unteren Endes des Gewindestiftes 11 sowie in etwaige vorhandene Verdrehsicherungsmerkmale hinein und bilden hiermit eine formschlüssige Verbindung zwischen dem Gewindestift und dem Blechteil. Nach der Öffnung der Presse kann das Zusammenbauteil gemäß Fig. 3g bestehend aus dem Blechteil 12 mit dem darin formschlüssig gehaltenen und das Blechteil 12 nicht durchdringenden Gewindestift 11 aus der Presse entnommen werden.

Ein Vorteil des erfindungsgemäßen Verfahrens besteht darin, daß - wie insbesondere aus Fig. 4a zu ersehen ist - das Blechteil 12 bei der Anbringung des Funktionselementes 10 nicht perforiert oder gelocht wird, so daß die Dichtigkeit des Blechteils 12 hinsichtlich Flüssigkeiten und/oder Gasen gewahrt bleibt und ein vielseitig verwendbares, eine Vielzahl von Funktionselementen, die auch unterschiedlich ausgebildet sein können, aufweisendes Zusammenbauteil geschaffen wird.

Die Draufsicht der Fig. 4b zeigt die sechs Bereiche 23, in denen die Vorsprünge 20 oder 120 der Formteile 16 bzw. 116 das Blechmaterial in ausgeprägter Weise in die Hinterschneidung 18 hineinschiebt. Die etwas zurückversetzten, gerundeten Bereiche 25, die jeweils zwischen zwei benachbarten Bereichen 23 liegen, entsprechend den Bereichen in Fig. 2b zwischen jeweils zwei benachbarten Formteilen 16, in denen die Vorsprünge 20 nicht vorhanden sind und somit hier nicht direkt zur Wirkung kommen.

Die Fig. 4c und 4d zeigen, daß die Erfindung keineswegs beschränkt ist auf bolzenartige Funktionselemente mit einem Kopfteil und einem Schaftteil. Statt dessen kann, wie in diesen Figuren gezeigt, die Erfindung genauso mit hohlen Körpern, beispielsweise Mutterelementen, verwendet werden, wobei in diesem Beispiel das gezeigte Mutterelement mit Innengewinde 10e eine Gestaltung hat entsprechend dem Kopfteil 10a des Funktionselements der Fig. 1a und 1b mit einer mittleren Bohrung bzw. einem mittleren Loch 27, die bzw. das koaxial zur Längsachse 36 des Elementes angeordnet ist. Die Außengestaltung des Mutterelementes gemäß Fig. 4c und 4d entspricht weitestgehend der Ausgestaltung des Kopfteils des entsprechenden Elementes der Fig. 1a und 1b, weshalb für gleiche Merkmale gleiche Bezugszeichen verwendet werden wie in Fig. 1a und 1b und auch die gleiche Beschreibung auch für diese Ausführungsformen gilt.

Dies gilt auch für das Zusammenbauteil gemäß Fig. 4e, das das Element der Fig. 4c und 4d nach Anbringung an einem Blechteil 12b zeigt.

Die insbesondere aus Fig. 1b erkennbare abgerundete Form des Kopfteils 10a des Funktionselementes 10 besitzt den Vorteil, daß Schwachstellen im Blechteil 12, die durch scharfe Kanten am Funktionselement 10 hervorgerufen werden könnten, vermieden werden. Derartige Schwachstellen könnten insbesondere bei Wechselbelastungen der Verbindung zwischen Funktionselement 10 und Blechteil 12 zu Materialermüdungen und letztlich zu einer Lockerung oder einem Lösen der Verbindung führen.

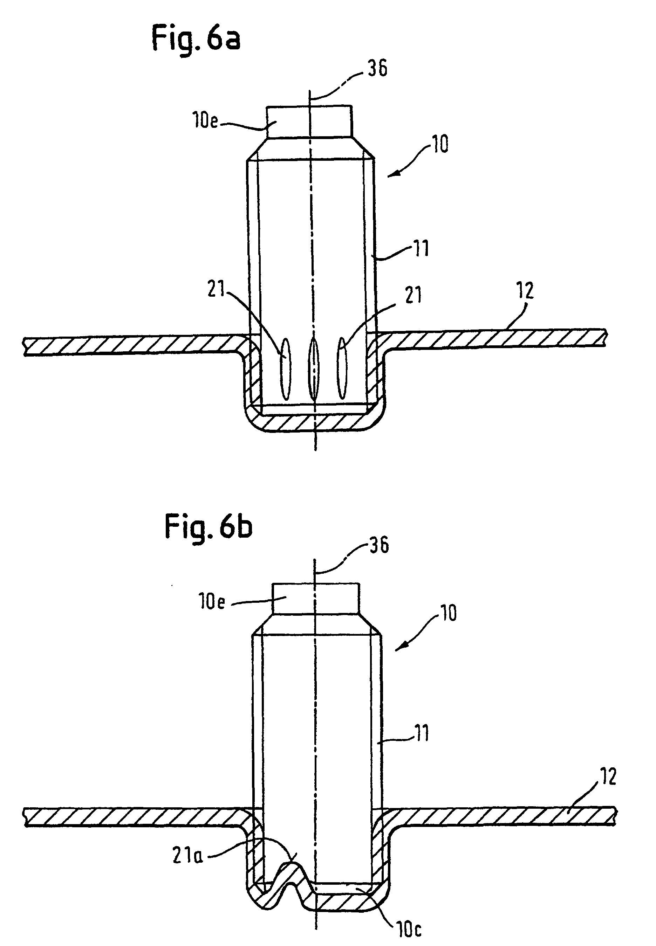

Die Fig. 5 sowie die Fig. 6a und 6b zeigen jeweils ein als Gewindestift ausgebildetes Funktionselement 10, dessen Anbringung an einem Blechteil 12 grundsätzlich entsprechend der vorstehend beschriebenen Vorgehensweise erfolgt, wobei das Gewinde 11 des Gewindestiftes 10 jeweils einen Hinterschneidungen im Sinne der Erfindung aufweisenden Bereich darstellt.

Derartige Gewindestifte können auf einem vergleichsweise einfachen und kostengünstigen Wege in einem Walzverfahren hergestellt werden, bei dem lange Rundstäbe durch entsprechend geformte Walzflächen aufweisende Walzen mit einem Gewinde versehen werden.

Fig. 5 zeigt einen Gewindestift 10 vor seiner Anbringung an einem Blechteil 12, der sich an seinem vom Blechteil 12 abgewandten Ende verjüngt und dort einen gewindefreien Halsabschnitt 10e aufweist. Auf seiner Umfangswand ist der Gewindestift 10 mit in Fig. 5 lediglich angedeuteten Ver-drehsicherungsmerkmalen 21 versehen, die in Form von Erhebungen und/oder Vertiefungen ausgeführt sein können.

Sowohl der gewindefreie Halsabschnitt 10e als auch die Verdrehsicherungsmerkmale 21 können durch entsprechend ausgeführte Walzen bei der Herstellung des Gewindestiftes 10 gleich mit ausgebildet werden, wobei ein dabei entstehender langer Gewindestab zur Herstellung einzelner kurzer Gewindestifte jeweils in den gewindefreien Bereichen durchtrennt wird. Das Schneiden in einzelne Längen kann auch durch das Walzverfahren realisiert werden, und zwar durch eine gesonderte Ausbildung der Gewindewalzwerkzeuge.

Fig. 6a zeigt den Gewindestift 10 von Fig. 5 im am Blechteil 12 angebrachten Zustand, in dem Blechmaterial durch das Formteil oder durch die Formteile der Matrize sowohl in das Gewinde 11 als auch in die Verdrehsicherungsmerkmale 21 gedrückt ist.

Prinzipiell wäre es auch möglich, während der Anbringung des Gewindestiftes 10 am Blechteil 12 mit an den Formteilen der Matrize ausgebildeten Formmerkmalen unter Zwischenlage von Blechmaterial das Gewinde 11 lokal einzudrücken, d. h. gewissermaßen zu zerstören, um auf diese Weise auf der Umfangswand des Gewindestiftes 10 Verdrehsicherungsmerkmale zu schaffen.

Fig. 6b zeigt einen weiteren an einem Blechteil 12 angebrachten Gewindestift 10, der im Unterschied zu den Gewindestiften gemäß Fig. 5 und Fig. 6a an seiner Umfangswand keine Verdrehsicherungsmerkmale aufweist. Stattdessen ist der Gewindestift 10 an seiner dem Blechteil 12 zugewandten Unterseite 10c mit zumindest einer als Verdrehsicherungsmerkmal dienenden Vertiefung 21 versehen, die exzentrisch bezüglich der Längsachse 36 des Gewindestiftes 10 angeordnet ist. Mittels einer entsprechend geformten Matrize bzw. entsprechend geformten Formteilen der Matrize ist Blechmaterial 13 in diese Vertiefung 21 gedrückt worden, wodurch der Gewindestift 10 nicht relativ zum Blechteil 12 verdreht werden kann. Alternativ oder zusätzlich zu der Vertiefung 21 können auch Erhebungen auf der Unterseite 10c des Gewindestiftes 10 als Verdrehsicherungsmerkmale vorgesehen sein.

Grundsätzlich ist auch eine Kombination der vorstehend erläuterten Verdrehsicherungsmerkmale 21 an einem Gewindestift 10 denkbar.

Die vorstehend beschriebene Anbringung des Funktionselementes 10 am Blechteil 12 erfolgt bei allen vorstehend erwähnten Ausführungsformen vorzugsweise in einer heute in der Blechverarbeitung üblichen Weise, nämlich mittels einer Presse oder eines Roboters durch Zusammenwirken eines in den Figuren hauptsächlich nicht dargestellten Setzkopfes mit der Matrize. Dabei wird die Matrize z. B. in einem unteren Werkzeug einer Presse aufgenommen, während der Setzkopf an einem oberen Pressenwerkzeug oder an einer Zwischenplatte der Presse angebracht ist. Auch andere Anbringungsmöglichkeiten sind gegeben. Beispielsweise kann die Matrize an der Zwischenplatte der Presse und der Setzkopf am oberen Werkzeug der Presse angebracht werden. Auch sind umgekehrte Anordnungen denkbar, bei denen die Matrize im oberen und der Setzkopf im unteren Werkzeug der Presse oder an der Zwischenplatte angebracht wird. Das Vorsehen einer derartigen Presse ist jedoch nicht zwingend. So sind beispielsweise Anordnungen möglich, bei denen die Matrize und der Setzkopf von einem Roboter getragen werden und die erforderliche Relativbewegung zwischem dem Setzkopf und der Matrize in Richtung der Längsachse des Funktionselementes entweder durch den Roboter selbst oder durch Krafteinwirkung von außen erfolgt.

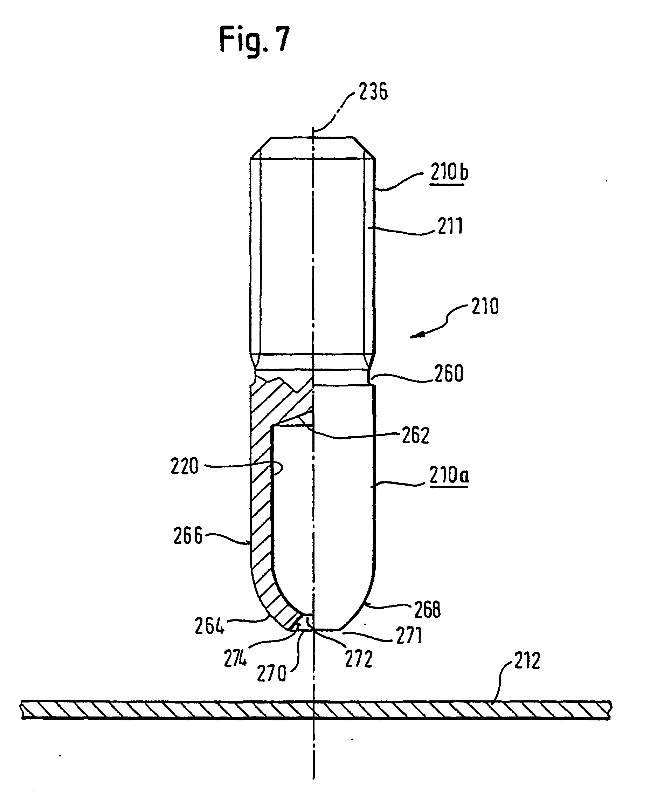

In an sich bekannter Weise verfügt der jeweils verwendete Setzkopf über einen üblicherweise rohrförmigen Blechniederhalter, der das Blechteil gegen die unbewegliche Stirnseite 40c bzw. 140c der Matrize oder gegen die Oberseite des die jeweilige Matrize 14 bzw. 114 aufnehmende Werkzeug (nicht gezeigt) klemmt. Eine besonders bevorzugte Ausführungsform des erfindungsgemäßen Funktionselementes sowie der Matrize und des Verfahrens zur Einbringung dieses Elementes wird nunmehr im Bezug auf die Figuren 7, 8, 9, 10 und 11a - 11k beschrieben.

Für diese Beschreibung werden die gleichen Grundbezugszeichen verwendet wie in den bisherigen Figuren, jedoch um die Zahl 200 erhöht, um eine Unterscheidung zu den bisherigen Figuren herbeizuführen. Die bisherige Beschreibung gilt jedoch für Teile, die jetzt beschrieben werden und die gleichen letzten Endziffern aufweisen, es sei denn, es ist etwas Gegenteiliges in der nachfolgenden Beschreibung ausgeführt.

Figur 7 zeigt zunächst ein Funktionselement 210, hier in Form eines Bolzenelementes mit einem ein Gewinde 211 aufweisendes Schaftteil 210b und einem hohlen Kopfteil 210a mit zumindest im wesentlichen dem gleichen Außendurchmesser wie das Schaftteil 210b. Es wird darauf hingewiesen, daß das Schaftteil 210b nicht zwangsweise mit einem Gewinde 211 ausgeführt werden muß, sondern wie bisher eine hiervon abweichende, nach Belieben wählbare Ausbildung zum Erreichen der jeweils vorgesehenen Funktion aufweisen kann. Beispielsweise kann das Schaftteil 210b als glatter Führungszapfen oder als Teppichbefestigungsstift mit einer eine Schnappverbindung mit einer Teppichöse ermöglichenden Ringnut ausgebildet werden. Besonders günstig bei diesem Element ist unter anderem, daß das Schaftteil 210b und das Kopfteil 210a zumindest im wesentlichen den gleichen Außendurchmesser aufweisen, so daß da Funktionselement aus Stangenoder Drahtmaterial kostengünstig herstellbar ist. Es ist jedoch nicht zwingend erforderlich, daß das Schaftteil 210b und das Kopfteil 210a den gleichen Durchmesser aufweisen, sondern es können auch erhebliche Durchmesserunterschiede vorliegen, wobei dies jedoch im allgemeinen einen größeren Aufwand bei der Herstellung des Elementes bedeutet.

Wie aus Figur 7 ersichtlich, weist das Kopfteil 210a eine Zylinderbohrung 220 auf, welche beispielsweise entweder durch einen Bohrer oder durch ein Kaltstauchverfahren hergestellt werden kann. In diesem Beispiel endet die Bohrung 220 in Richtung des Schaftteils 210b hingehend kurz vor der die Grenze zum Schaftteil 210b darstellende Ringnut 260, und zwar in einer konusförmigen Vertiefung 262. Dies ist allerdings nicht zwingend erforderlich. Das Element könnte aus Rohrmaterial hergestellt werden, wodurch die Bohrung 220 sich dann auch durch das Schaftteil 210b hindurch erstrecken würde, wobei jedoch der Durchmesser der Bohrung 220 im Bereich des Schaftteils 210b dann vorzugsweise deutlich kleiner sein sollte als der Durchmesser der Bohrung 220 im Kopfteil 210a, damit das Funktionselement nur im Kopfbereich während der Anbringung am Blechteil 212 verformt wird.

An dem dem Schaftteil 210b abgewandten Endbereich 264 verjüngt sich die bisherige kreiszylinderförmige Ringwand 266 des Kopfteils 210a zu einer abgerundeten geschoßähnlichen Ausbildung 268, wobei das Stirnende 270 nicht geschlossen sondern offen ist und eine Öffnung 272 definiert, die deutlich kleiner ist als der Durchmesser der Zylinderbohrung 220. Der Endbereich 264 des Funktionselementes 210 ist sozusagen sphärisch abgerundet mit einer flachen, offenen Stirnseite 270. Wie aus Figur 7 ersichtlich, ist der hohle Endbereich 264 des Elementes zwischen der Stirnseite 270 und der Öffnung 272 kegelstumpfartig ausgebildet, und zwar so, daß der Endbereich 264 des Kopfteils 210a innen eine ringförmige schräge Fläche 274 aufweist mit einem eingeschlossenen Konuswinkel von etwa 90°. Die Wandstärke des hohlen Bereiches des Kopfteils 210a ist über die gesamte Länge dieses Bereiches zumindest im wesentlichen gleich. Das Bezugszeichen 236 deutet auf die mittlere Längsachse des Funktionselementes 210 und es ist ersichtlich, daß das Schafteil 210b und das Kopfteil 210a axial zueinander im Bezug auf diese mittlere Längsachse 276 angeordnet sind. Obwohl in dieser Ausführungsform das Kopfteil 210a des Funktionselementes im Querschnitt kreisrund ist, ist es denkbar, eine von der Kreisform abweichende Querschnittsform beispielsweise eine mehreckige Form oder eine Form mit Längsnuten oder Längsrippen zu wählen, insbesondere dann, wenn eine noch bessere Verdrehsicherung im eingebauten Zustand erwünscht ist.

Das Funktionselement 210 kann wie gesagt aus Stangenmaterial, Drahtmaterial oder Rohrmaterial herstellt werden, und zwar durch ein Wälzverfahren zur Erzeugung der äußeren Gestaltungsmerkmale des Funktionselementes, gegebenenfalls in Kombination mit einem Bohr- oder Stauchvorgang zur Herstellung der Zylinderbohrung 220. Alternativ hierzu kann das Element durch ein Kaltstauchverfahren erzeugt werden oder durch ein Hochdruckumformverfahren, was insbesondere dann in Frage kommt, wenn Rohrmaterial als Ausgangsmaterial für das Element dient.

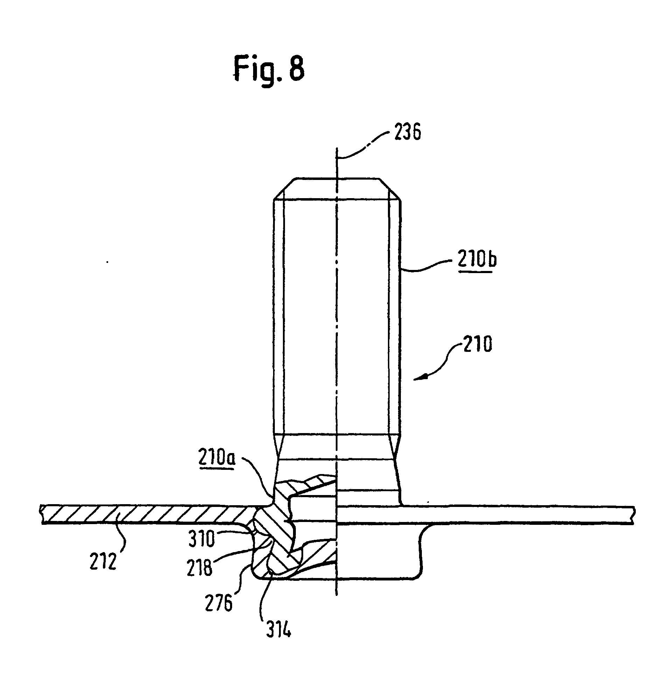

Figur 8 zeigt nun das Funktionselement 210 in eingebautem Zustand im Blechteil. Man merkt, daß das Schaftteil 210b erheblich verformt und formschlüssig mit einer durch das Anbringungsverfahren ausgebildeten topfartigen Vertiefung 276 des Blechteils 212 verbunden ist, wobei das Schaftteil 210b das Blechteil 212 nicht durchdringt, so daß eine fluiddichte Verbindung vorhanden ist bspw. in dem Sinne, daß sich evtl. unterhalb des Blechteils befindliche Wasser nicht durch das Blechteil um das Funktionselement 210 herum auf die obere Seite des Blechteils gelangen kann.

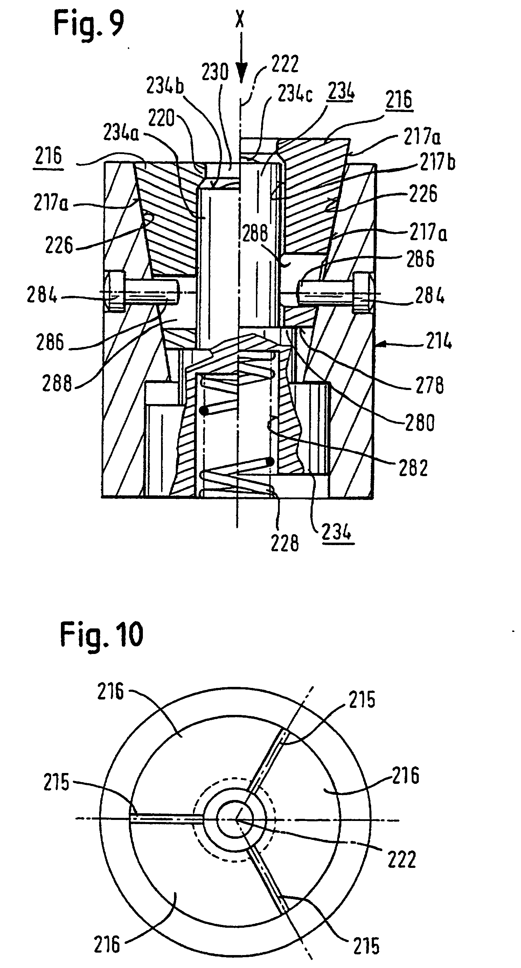

Für die Anbringung des Elementes im Blechteil wird die Matrize gemäß Figuren 9 und 10 verwendet, welche der Matrize der Figur 3 ähnlich ist.

Wie aus den Figuren 9 und 10 ersichtlich, weist aber die jetzige Matrize lediglich drei Formteile 216 auf, die auch hier in axialer Richtung 222 der Matrize verschiebbar sind.

Die Formteile 216 liegen in Figur 9 und 10 jeweils mit einer schrägen Außenfläche 217a an einer schräg auf die mittlere Längsachse 222 zu verlaufenden kegelstumpfförmigen Formfläche 226 an und sind mit einer senkrecht zur Längsachse 222 der Matrize 214 verlaufenden Unterseite 278 an einer Ringschulter 280 eines mittig angeordneten Anschlagelementes 234 abgestützt, wobei das Anschlagelement 234 durch eine Schraubendruckfeder 228 in Figur 9 nach oben gedrückt wird. Die Schraubendruckfeder 228 befindet sich nämlich in einer zur Längsachse 222 koaxial angeordneten zylindrischen Bohrung 282 des Anschlagelementes 234 und drückt mit ihrem einen Stirnende an das geschlossene Ende der Bohrung 282 am Anschlagelement 234 und mit ihrem anderen Ende an ein unteres Werkzeug der Presse, in dem die Matrize 214 angeordnet ist. Alternativ hierzu kann die Matrize 214 der Figur 9 an ihrem unteren Ende mit einem Bodenteil versehen werden ähnlich dem Bodenteil 140a der Figur 3-Ausführung, an dem dann die Schraubendruckfeder 228 an ihrem unteren Ende abgestützt wäre. Eine derartige Ausbildung hätte den Vorteil, daß die Matrize sich dann als Einheit darstellt, dessen einzelne Teile nicht verlorengehen können.

Es ragen drei Stifte 284 in radialer Richtung durch die Zylinderwand der Matrize 214, wobei das freie Ende 286 von jedem Stift (nur zwei gezeigt) in eine entsprechende Ausnehmung 288 des jeweils zugeordneten Formteils 216 hineinragt. Die Stifte 284 begrenzen hierdurch die maximale Ausfahrbewegung der Formteile (auf der rechten Seite von Figur 9 dargestellt) und halten die Formteile 216 verliersicher und in der erwünschten radialen Anordnung in der Matrize 214, so daß die im geöffneten Zustand der Matrize erforderlichen, sich zwischen den Formteilen 216 befindlichen, spaltartigen Zwischenräume 215, die beim Schließen der Matrize im wesentlichen auf Null reduziert werden, sich automatisch unter der Wirkung der Schraubendruckfeder 228 einstellen. Zu diesem Zweck entspricht die Breite der jeweiligen Ausnehmungen 288 in den jeweiligen Formteilen 216 zumindest im wesentlichen dem Durchmesser der jeweiligen Enden 286 der Stifte 284.

Wie ebenfalls aus der Figur 9 ersichtlich, weist das Anschlagelement 234 oberhalb der Ringschulter 280 ein zylinderförmiges Teil 234a mit einem Stirnende 234b, welches den Boden eines im übrigen von den Formteilen 216 begrenzten, im wesentlichen zylindrischen Umformraum 230 bildet. Man merkt, daß bei dieser Ausführungsform das Stirnende 234b des Anschlagelementes 234 einen mittig angeordneten kuppelartigen Vorsprung 234c aufweist, welcher von einer senkrecht zur mittleren Längsachse 222 stehenden Ringfläche 234d umgeben ist.

Wie bei der Ausführungsform gemäß Figur 3 liegen die Formteile 216 mit ihrem radial nach innen gerichteten teilkreiszylindrischen Flächen 217b im geschlossenen Zustand der Matrize (links von der mittleren Längsachse 222 in Figur 9) an der zylindrischen Außenfläche des oberen Teiles 234a des Anschlagelementes an. Wie ebenfalls in Figur 9 ersichtlich, sind die Formteile 216 im Bereich ihrer oberen Enden jeweils mit einem der Längsachse 222 zugewandten wulstartigen Vorsprung 220 versehen, mit dem in einer noch zu beschreibenden Weise Blechmaterial des Blechteils 212 in einer Hinterschneidung des Funktionselementes 210 gedrückt werden kann. In dieser Ausführungsform bilden die wulstartigen Vorsprünge 220 die seitliche Begrenzung des Umformraumes 230.

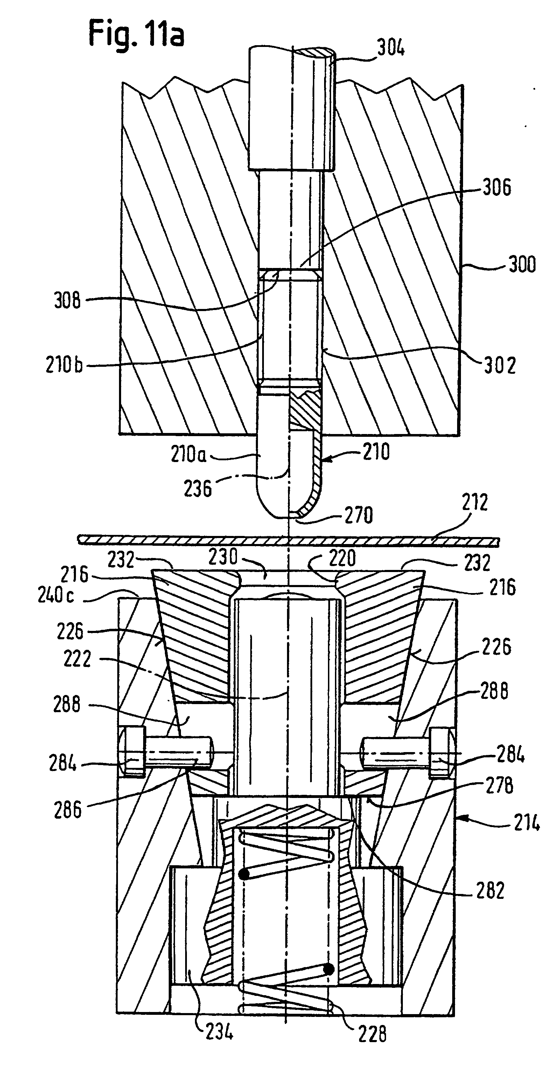

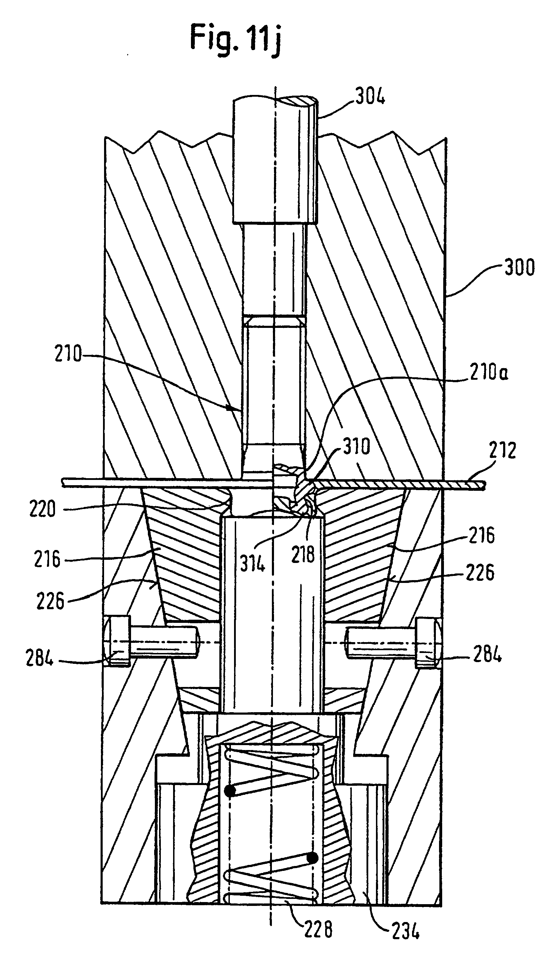

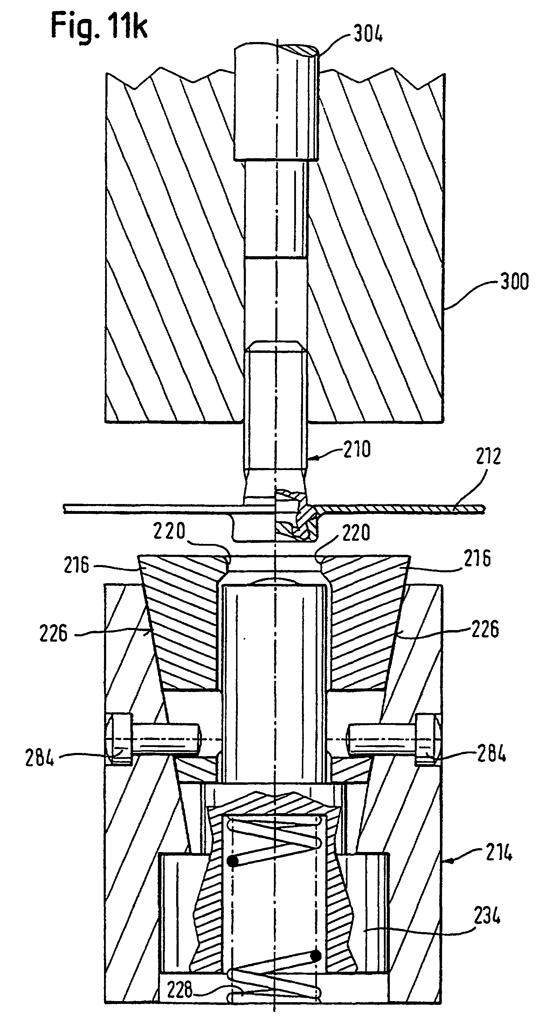

Es werden nunmehr mit Bezug auf die Figuren 11a bis 11k beschrieben, wie das Funktionselement 210 mit Hilfe der Matrize 214 an das Blechteil 212 angebracht werden kann.

Figur 11a zeigt den Ausgangszustand, in dem die Matrize 214 sich im unteren Werkzeug einer Presse befindet, ein Blechteil 212 oberhalb der Matrize angeordnet ist und das Funktionselement 210 in einem schematisch dargestellten Setzkopf 300 gehalten ist, beispielsweise durch eine Ringfeder aus Kunststoff (nicht gezeigt), welche einen Reibschluß zwischen dem Kopfteil 210a des Funktionselements 210 und einer Bohrung 302 des Setzkopfes sicherstellt. Man merkt, daß die Längsachse 236 des Funktionselementes 210 mit der Längsachse 222 der Matrize 214 ausgerichtet ist und zugleich die mittlere Achse der Bohrung 302 des Setzkopfes 300 entspricht. Man merkt auch, daß alle Formteile 216 sich in ihrer oberen Position gemäß der rechten Hälfte von Figur 9 befinden, d.h. die untere Begrenzung der jeweiligen Ausnehmungen 288 der Formteile 216 sich in Berührung mit der Unterseite der jeweiligen Enden 286 der jeweiligen Stifte 284 befinden. Diese Position entsteht aufgrund der Wirkung der Schraubendruckfeder 228, welche das Anschlagelement 234 nach oben drückt, so daß die Ringschulter 282 an die untere Auflagefläche 278 der jeweiligen Formteile 216 drückt. Im Setzkopf 300 befindet sich ein Stempeleinsatz 304, dessen unteres Stirnende 306 auf das obere Stirnende 308 des Schaftteils 210b des Funktionselementes 210 drückt.

Es sei darauf hingewiesen, daß obwohl hier angenommen wird, daß die Matrize 214 im unteren Werkzeug der Presse angeordnet ist, diese wahlweise auch in einer Zwischenplatte der Presse oder gar im oberen Werkzeug der Presse angeordnet werden kann, wobei der Setzkopf 300, je nach Anbringungsort der Matrize, an einer Zwischenplatte der Presse, am oberen Werkzeug der Presse oder im unteren Werkzeug der Presse anzuordnen wäre. Im übrigen ist es nicht zwingend erforderlich, daß die Matrize 214 und der Setzkopf 300 sich in einer Presse befinden, sie könnten beispielsweise gegeneinander und voneinander weg durch einen Roboter bewegt werden oder Teile eines andersartigen Werkzeuges darstellen.

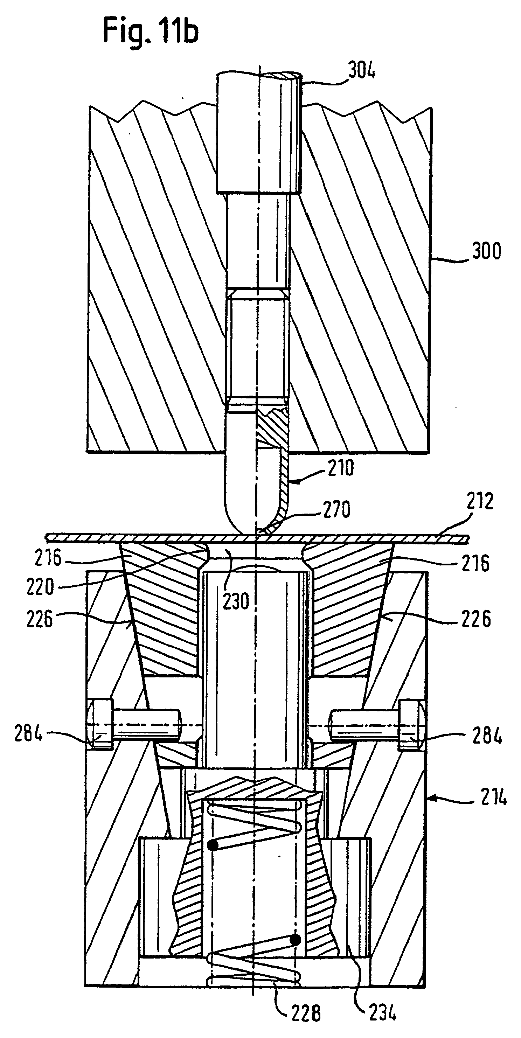

Auf jeden Fall zeigt Figur 11b den ersten Schritt des Fügeverfahrens, bei dem der Setzkopf 300 gegenüber der Figur 11a sich nach unten auf die Matrize 214 zu bewegt hat, so daß das Stirnende 270 des Funktionselementes 210 das Blechteil 212 auf die obere Stirnseite 232 der Formteile 216 gedrückt hat.

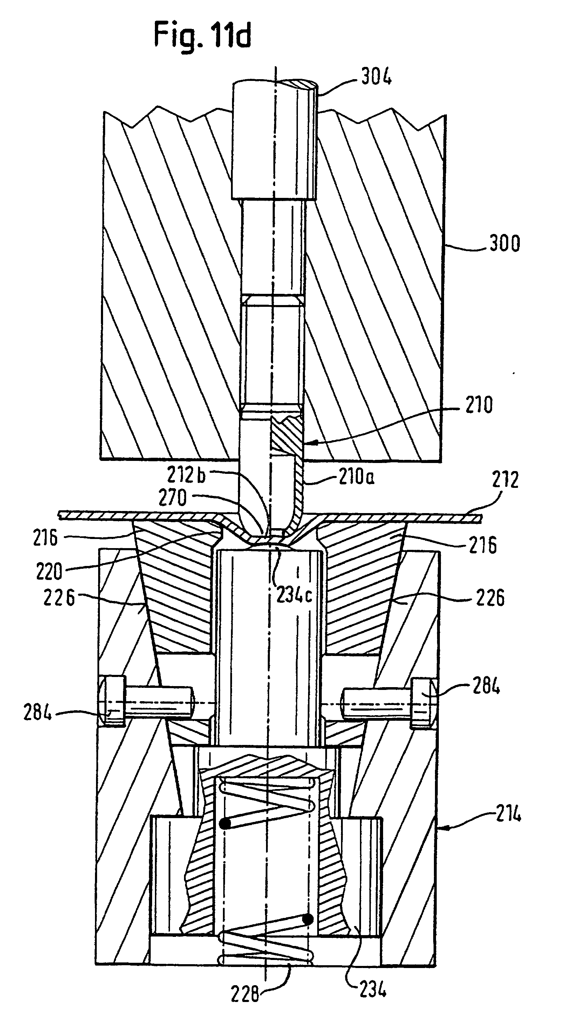

Im weiteren Verlauf des Fügeverfahrens bewegt sich der Setzkopf 300 weiter auf die Matrize 214 zu und das Stirnende des Funktionselementes 210 drückt das Blechmaterial in den Umformraum 230 hinein, so daß eine Vertiefung 212a im Blechteil 212 dort gebildet wird. Die Kraft, die über den Setzkopf und das Funktionselement auf das Blechteil ausgeübt wird, reicht nicht aus, um die Formteile 216 gegen die Kraft der Schraubendruckfeder 228 nach unten zu drücken, so daß, wie in Figur 11d gezeigt, die Verformung 212a, d.h. die Eindellung des Blechteils 212 weitergeht ohne eine axiale Ausweichbewegung der Formteile 216 bis das Blechteil 212 zwischen dem kuppelartigen Vorsprung 234c des Anschlagelementes 234 und dem Stirnende 270 des Kopfteils 210a des Funktionselementes 210 geklemmt ist, wobei der kuppelartige Vorsprung 234c eine leichte nach oben gerichtete Delle 212b im Blechteil erzeugt, so daß dieses geringfügig in die Öffnung am Stirnende des Funktionselementes eingedrückt wird.

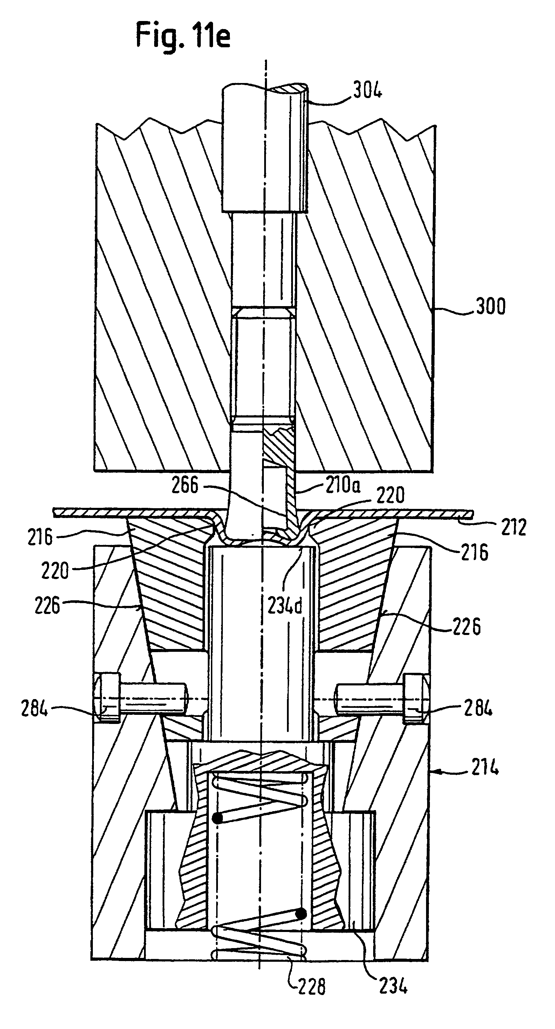

Im weiteren Stadium der Schließbewegung der Presse bewegt sich der Setzkopf 300 weiter auf die Matrize 214 zu, wobei die über das Funktionselement 210 auf das Anschlagelement 234 ausgeübte Kraft immer noch nicht ausreicht, um die Schraubendruckfeder 228 zu komprimieren, stattdessen führt die auf das Kopfteil 210a des Funktionselementes 210 ausgeübte Kraft zu einer Verformung dessen unteren Endes, so daß sich die Gestalt ergibt, die in der Figur 11e gezeigt ist. Man merkt, daß das Blechteil 212 sich um die gerundeten Kanten der wulstartigen Vorsprünge 220 gelegt hat, daß das Stirnende des Kopfteils 210a des Funktionselementes das Blechteil an die Ringfläche 234d gedrückt hat und daß während dieser Verformungen das Stirnende des Kopfteils 210a selbst verformt wird, so daß sich das Funktionselement leicht radial nach außen im Bereich des Stirnendes erweitert wird, während der Bereich um das bisherige Stirnende 270 axial nach innen verformt wurde. Man merkt auch, daß die Wanddicke des zylindrischen Wandbereiches 266 des Kopfteils 210a aufgrund der Verformung sich geändert hat.

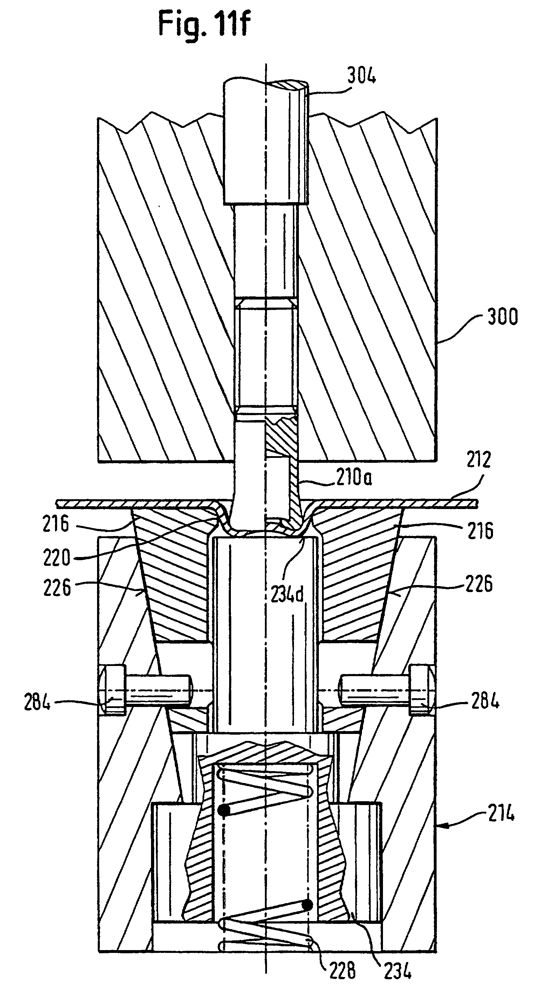

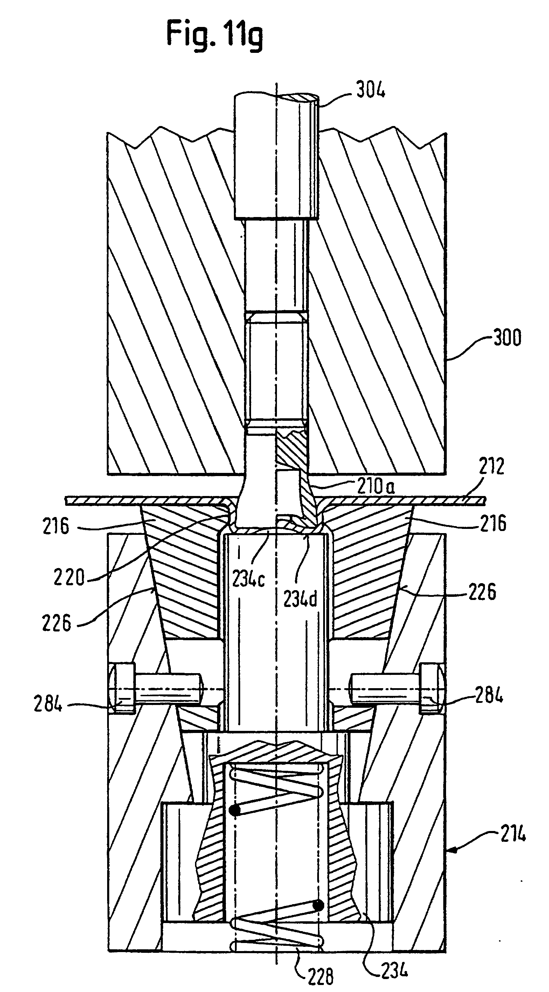

Die Darstellung der Figur 11f ist der Darstellung der Figur 11e ähnlich, nur sieht man hier eine weiter fortgeschrittene Verformung des Blechteils 212, das jetzt im Bereich oberhalb der Ringfläche 234d im Vergleich zu der Figur 11e weniger dick ist. Die Formteile 216 befinden sich immer noch in der oberen Position, d.h. die Schraubendruckfeder 228 ist noch nicht durch die Kraft des Setzkopfes zusammengedrückt worden. Dies gilt auch für die Darstellung der Figur 11g, wo der Setzkopf 300 weiter nach unten in Richtung auf die Matrize 214 zu sich bewegt hat, wodurch eine ausgeprägte weitere Verformung des Kopfteils 210a des Funktionselementes stattgefunden hat und die Dicke des Blechteils im Bereich der Ringfläche 234d und im unteren Bereich des kuppelartigen Vorsprunges 234c weiter reduziert ist.

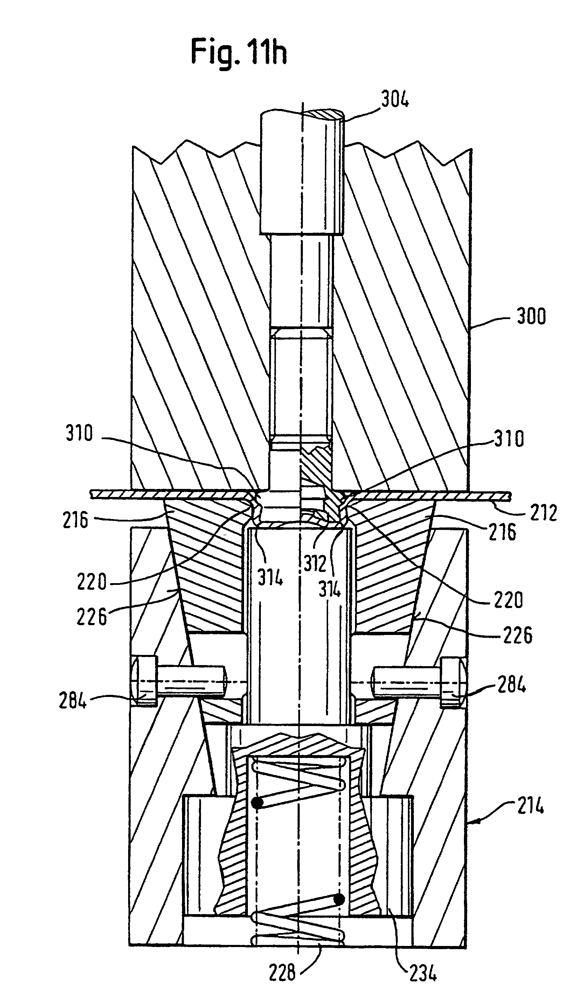

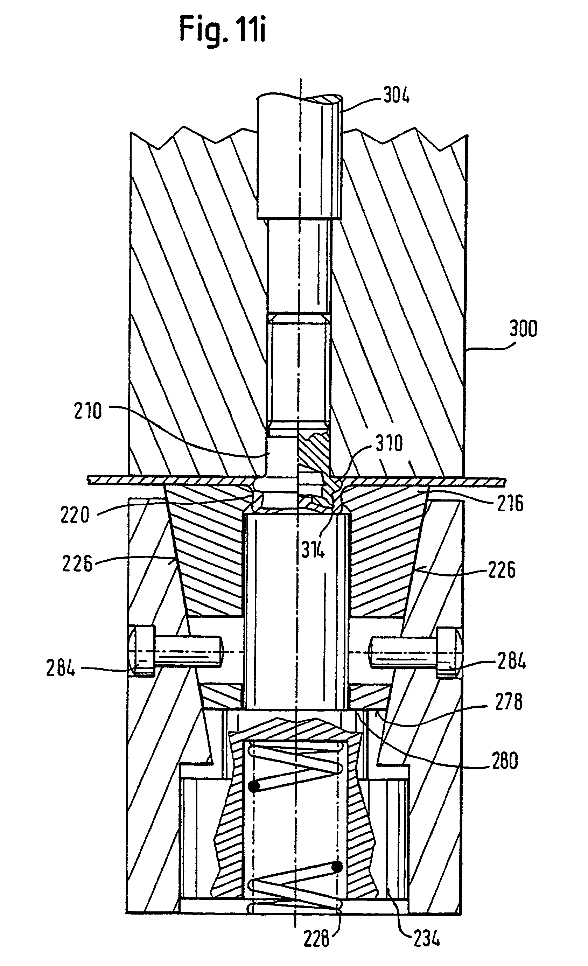

Diese Verformung des Kopfteils 210a des Funktionselementes 210 schreitet nunmehr fort, während sich der Setzkopf 300 der Matrize 214 weiter nähert bis der Zustand gemäß Figur 11h erreicht ist. Man merkt, daß der zylindrische Wandbereich des Kopfteils 210a nunmehr so gestaucht worden ist, daß sich ein radial nach außen vorspringender Wulst 310 aufgrund einer Faltung des zylindrischen Wandbereiches gebildet ist und man merkt auch, daß eine weitere ausgeprägte Faltung an der Stelle 312 vorliegt, wo die axial gerichtete Wandung des Kopfteils 210a in den radial nach innen gerichteten Bereich übergeht, der aus dem ehemaligen Stirnende des Kopfteils 210a gebildet ist. An der Stelle dieser Faltung fängt das Material ds Kopfteils 210a an, einen zweiten radial nach außen gerichteten wulstartigen Vorsprung 314 zu bilden.

Man merkt auch, daß der ringförmige, wulstartige Vorsprung 310 das Blechteil 212 im Bereich der Rundung der wulstartigen Vorsprünge 220 der Formteile eingedrückt hat, so daß die Blechdicke dort kleiner geworden ist. Auch im Zustand der Figur 11h reicht die Kraft der Feder 228 aus, um eine Schließbewegung der Formteile 216 der Matrize zu verhindern.

Nach Erreichen des Zustandes gemäß Figur 11h ist die Schließkraft jedoch nunmehr so groß, daß sich die Formteile, wie in Figur 11i gezeigt, jetzt nach unten bewegen, die Schraubendruckfeder 228 wird zusammengedrückt und die Formteile 216 drücken gleichzeitig über die Auflagefläche 278 und die Ringschulter 280 das Anschlagelement 234 nach unten, so daß sich die axiale Höhe des Umformraumes 230 nicht ändert. Dadurch, daß die nach unten gerichtete Bewegung der Formteile 216 dazu führt, daß diese sich entlang der Formschräge 226 der Matrize gleiten, werden sie gezwungen, sich gleichzeitig radial nach innen zu bewegen, wodurch einerseits die Spalträume 215 zwischen den einzelnen Formteilen 216 kleiner werden und andererseits die radial nach innen gerichtete Bewegung der wulstartigen Vorsprünge 220 der Formteile 216 das Blechmaterial des Blechteils 212 fest in die ringförmige Nut 218 drückt, die sich zwischen dem wulstartigen Vorsprung 310 des Funktionselementes und dem unteren Ende des Kopfteils 210a gebildet hat.

Diese Schließbewegung der Matrize, d.h. die radial nach innen gerichtete Bewegung der Formteile 216 setzt sich dann fort, bis, wie in der Figur 11j dargestellt, der geschlossene Zustand der Matrize erreicht ist, das Blechteil ist vollständig eingeschlossen zwischen dem Stirnende des Setzkopfes und dem diesen zugewandten Stirnende der Matrize 214. Das Ergebnis dieser weiteren Stauchbewegung ist, daß die ringförmige Hinterschneidung 218 zwischen dem wulstartigen Vorsprung 310 und dem wulstartigen Vorsprung 314 am unteren Stirnende des Kopfteils 210a noch ausgeprägter ist und eine noch innigere Verbindung mit dem Blechmaterial in diesem Bereich stattgefunden hat. Weiterhin übergreift das Blechmaterial teilweise den wulstartigen Vorsprung 310 des Funktionselementes, so daß auch hier eine formschlüssige Verbindung entsteht.

Man merkt auch, daß das verformte untere Stirnende des Funktionselementes das Blechmaterial im Bereich des Bodens des Topfes jetzt stark verdünnt hat, wobei allerdings das Blechmaterial 212b in der stirnseitigen Öffnung des unteren Endes des Funktionselementes 210 eher dicker geworden ist, aufgrund der Verschiebung des Blechmaterials, und dort die verformte Seitenwand des Kopfteils 210a des Funktionselementes abstützt, so daß die formschlüssige Verbindung mit dem Blechteil eine wirklich sichere Verbindung ist.

Wenn der Zustand gemäß Figur 11j erreicht ist, öffnet sich die Presse und das Zusammenbauteil (210 + 212) kann nunmehr entfernt werden. Die Formteile 216 bewegen sich bei Öffnung der Presse unter der Wirkung der Feder 228 nach oben, so daß der geöffnete Ausgangszustand der Matrize wieder hergestellt ist und daß der soeben beschriebene Zyklus sich mit einem neuen Funktionselement 210 und einem neuen Blechteil 212 wiederholen kann. Die Presse wird soweit geöffnet, daß das so gebildete Zusammenbauteil, das in Figur 8 für sich in einem großen Maßstab dargestellt ist, aus der Presse entnommen werden kann.

Obwohl die Feder 228 hier als eine Schraubendruckfeder gezeigt ist, kann sie durch andere Federn ersetzt werden, beispielsweise durch Fluiddruckfedern, die an sich gut bekannt sind.

Sollten die Funktionselemente 210 wie oben erwähnt mit einem nicht kreisrunden Querschnitt im Bereich des Kopfteils 210a versehen werden, beispielsweise mit einem mehreckigen Querschnitt oder mit Rippen und/oder Nuten, so wird das Verfahren genauso durchgeführt wie oben beschrieben. Das Blechmaterial wird innig und formschlüssig mit der Außenform des Kopfteils verbunden, wodurch eine erhöhte Sicherheit gegen Ausdrehen zu erwarten ist. Bei einer derartigen Ausbildung soll darauf geachtet werden, daß die Formmerkmale auf der Außenseite des Kopfteils 210A nicht so ausgeprägt sind, daß sie das Blechmaterial in unzulässiger Weise verletzen.

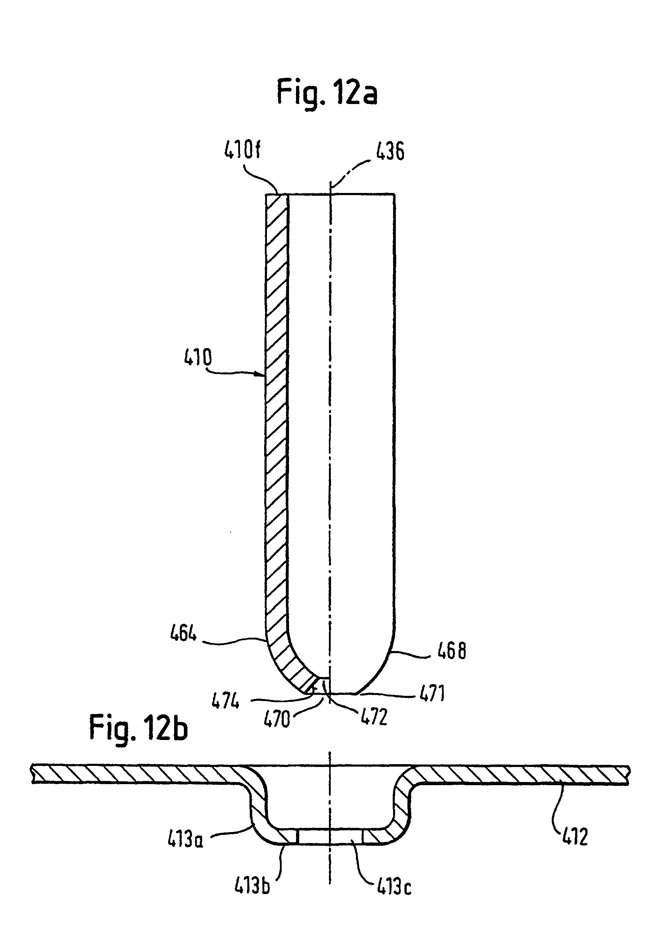

Die Fig. 12a zeigt ein weiteres Beispiel eines Funktionselements, das dem Elemente der Fig. 7 ähnlich ist. Es werden daher für die Beschreibung des Elementes der Fig. 12a wie auch der weiteren Fig. 12b bis 16 die gleichen Bezugszeichen verwendet wie für die Fig. 7 bis 11, jedoch um die Grundzahl 200 erhöht, um eine Unterscheidung zu den bisherigen Figuren herbeizuführen. Die bisherige Beschreibung gilt jedoch für Teile, die jetzt beschrieben werden und die gleichen letzten Endziffern aufweisen, es sei denn, etwas gegenteiliges wird in der nachfolgenden Beschreibung ausgeführt.

Das Funktionselement 410 der Fig. 12a besteht aus einem Rohrstück, das an seinem unteren Ende in Fig. 12a die gleichen Formmerkmale aufweist wie das Element 210 der Fig. 7. Solche Funktionselemente können auf einfache Weise von Rohrlängen abgeschnitten werden, wobei die Umformung des einen Endes zur Erzeugung des Endbereich 464 durch einfache Walzwerkzeuge oder Kaltschlagverfahren erzeugt werden kann. Das Funktionselement 410 der Fig. 12a weist in diesem Beispiel kein Außengewinde, Innengewinde oder andere besondere Gestaltungen auf, könnte jedoch ohne weiteres solche, einer bestimmten Funktion zugeordneten Merkmale wenigstens im Bereich der Fig. 12a oberhalb des für die Verformung benötigten Bereichs, die für die Anbringung am Blechteil erforderlich ist, aufweisen. Auch ist es nicht zwingend erforderlich, daß die Wanddicke über die gesamte Länge gleich bleibt oder daß das Element ohne Stufen oder Absätze vorliegt. Solche können nach Belieben vorgesehen werden. Insbesondere lassen sich solche Merkmale zumindest teilweise durch hydraulische Umformverfahren kostengünstig aus Rohrmaterial herstellen.

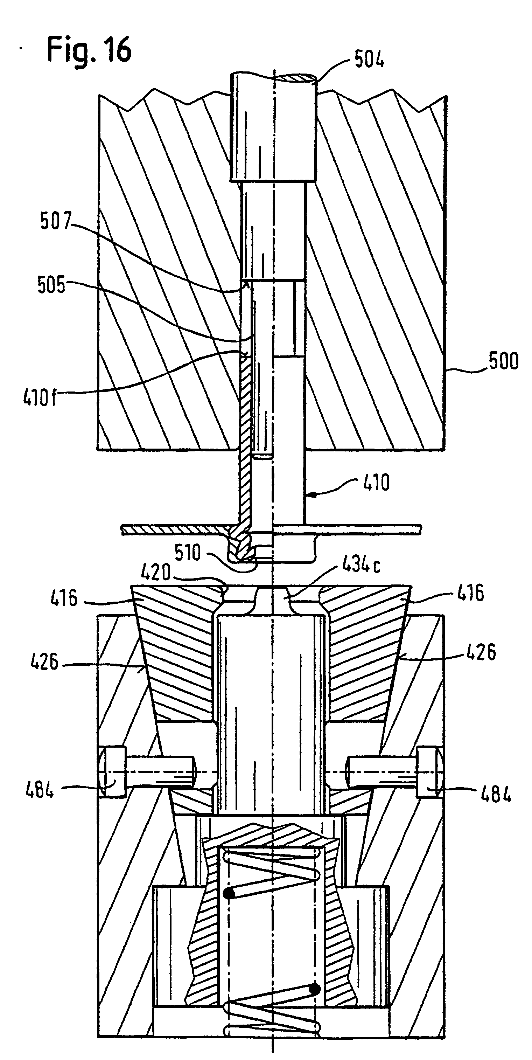

Elemente entsprechend Fig. 12 können auch an einem Blechteil angebracht werden, wie bisher im Zusammenhang mit den Figuren 8 bis 11 beschrieben, sofern Maßnahmen getroffen werden, um unerwünschte Verformungen der rohrförmigen Wandung im oberen Bereich zu vermeiden, wie später im Zusammenhang mit Fig. 16 näher erläutert wird.

Es besteht aber auch die Möglichkeit, ein Funktionselement wie 410 mit einem Blechteil zu verbinden, das eine besondere Vorbereitung erfahren hat, wie in Fig. 12b gezeigt.

Fig. 12b zeigt nämlich ein Blechteil 412, das in einem früheren Arbeitsgang, beispielsweise in einer früheren Station eines Folgeverbundwerkzeuges, mit einer topfartigen Vertiefung 413a mit einer im Bodenbereich 413b vorgesehene Lochung 413c, wobei das in Fig. 12b dargestellte Loch kreisrund ist, was auch für die topfartige Vertiefung 413a gilt.

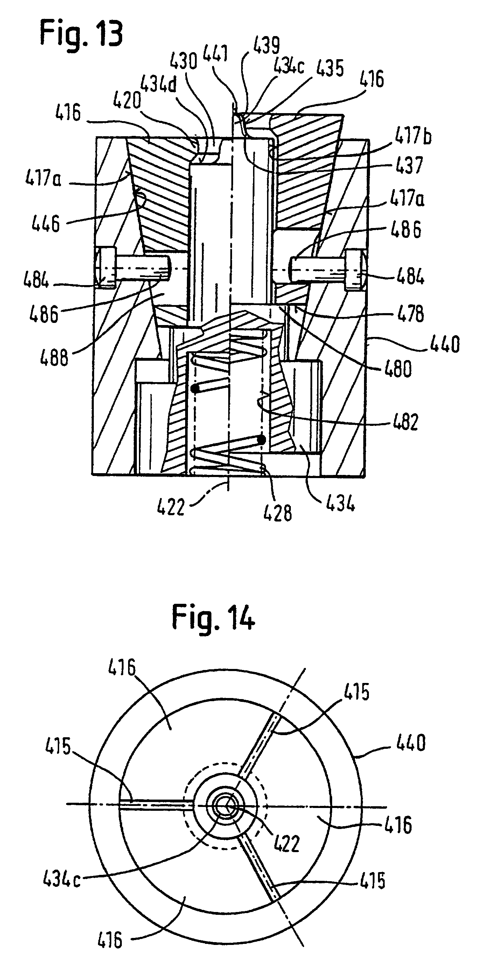

Die Anbringung des Funktionselements 412 der Fig. 12a an einem Blechteil 412 entsprechend Fig. 12b erfolgt unter Anwendung einer Matrize 414 gemäß Fig. 13 und 14, welche der Matrize 214 der Fig. 9 und 10 bis auf die Ausbildung dem mittig angeordneten Vorsprung 434c identisch ist. Dieser Vorsprung 434c ist bei der Ausführungsform gemäß Fig. 13 und 14 mit einer leicht konusförmigen Mantelfläche 435 versehen, welche in Fig. 13 nach oben auf die mittlere Längsachse 422 leicht zuläuft und über Radien 437 und 439 in die Ringfläche 434d bzw. in die obere, senkrecht zur mittleren Längsachse 422 angeordneten kreisförmigen Stirnfläche 441 übergeht. Das als Radius 437 bezeichnete Merkmal kann auch die Form von einen oder mehreren radialen Nasen aufweisen, die - wie nachfolgend näher erläutert - im fertigen Zusammenbauteil für eine zusätzliche Verdrehsicherung sorgen. Diese radialen Nasen haben in Seitenansicht die gleiche Form wie der Radius 437 oder schräge geradlinige ober Begrenzungen, die im allgemeinen an den Kanten gerundet sind.

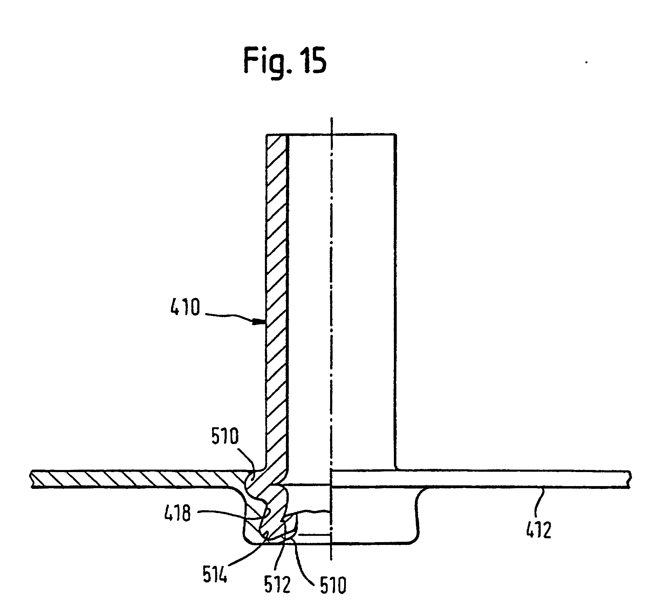

Wie aus den Fig. 15 und 16 hervorgeht, wird bei dem Anbringungsvorgang unter Anwendung der Matrize gemäß Fig. 13 und 14, genau wie im Zusammenhang mit den Fig. 11a bis k beschrieben, das untere Ende des rohrförmigen Funktionselementes 410 so umgeformt, daß eine formschlüssige Verbindung mit dem Blechteil 12 im Bereich der topfartigen Vertiefung entsteht, mit der Ausnahme, daß in diesem Beispiel die topfartige Vertiefung bereits vorgeformt wurde. Im übrigen drückt bei diesem Beispiel der mittlere Vorsprung 434c des Anschlagelementes 434 der Matrize in das Loch 413c der ringförmigen Vertiefung 413a hinein und bildet eine verdünnte, zylindrische Lippe 510, die nach oben in den Hohlraum des hohlen Funktionselementes 410 hineinragt. Die leicht konusförmige Ausbildung des Vorsprunges 434c im Bereich 435 stellt sicher, daß das Zusammenbauteil von der Matrize leicht entfernt werden kann, d.h. in der Presse nicht hängenbleibt. Sollten, wie oben erwähnt, sich radial erstreckende Nasen anstelle des Radius 437 im Bereich des Überganges des Vorsprunges 434c in die ringförmige Anlagefläche 434d vorliegen, so führt jede solche radiale Nase zu entsprechenden radialen Vertiefungen in der ringförmigen Lippe 510 und im benachbarten Material des unteren Bereiches des rohrförmigen Elementes 410, was die formschlüssige Verbindung und vor allem die Verdrehsicherung zwischen dem Element 410 und dem Blechteil weiter erhöht.

Die Figur 15 läßt auch erkennen, daß es erfindungsgemäß nicht zwingend erforderlich ist, eine flüssigkeits- und/oder gasdichte Verbindung vorzusehen, sondern eine solche Verbindung stellt einen möglichen Vorteil der Erfindung dar, der ggf. ausgenützt werden kann.

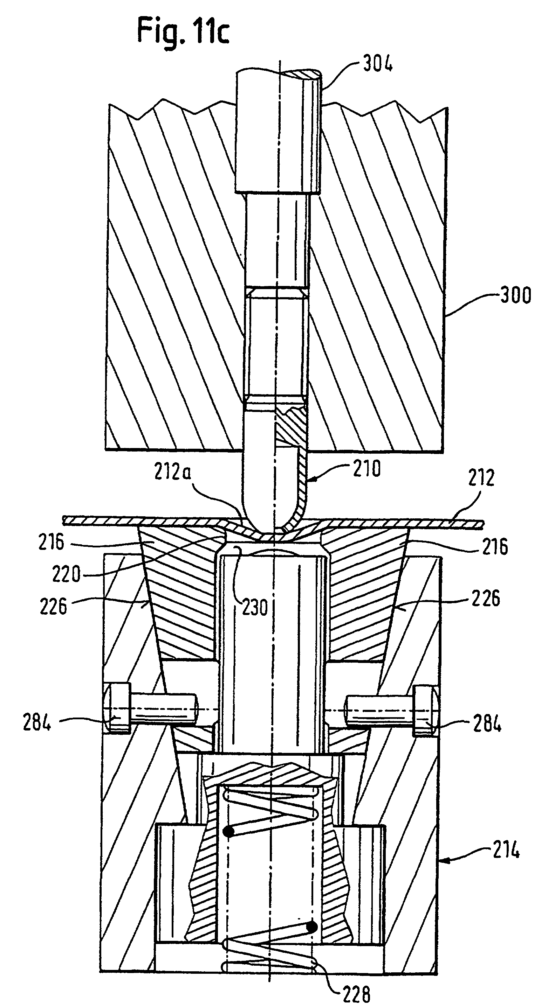

Fig. 16 zeigt im übrigen den Setzkopf 500, der zum Einsetzen des rohrförmigen Elementes 410 hier verwendet wird. Dieser Setzkopf 500 entspricht im wesentlichen dem Setzkopf 300 in Fig. 11. Der Stempel 504 weist jedoch hier einen zylindrischen Vorsprung 505 auf, der sich innerhalb des rohrförmigen Elementes 410 über eine erhebliche Länge desselben hineinerstreckt, und zwar bis zu einer Stelle, die den verformbaren Bereich des rohrförmigen Funktionselements 410 begrenzt. Die Wandung des rohrförmigen Elementes 410 ist nämlich bis zu dieser Stelle auf der Innenseite durch den zylindrischen Vorsprung 505 des Stempels 504, und auf der Außenseite durch die Bohrung des Setzkopfes 500 innen und außen abgestützt, so daß dort keine Verformung der Wandung auftreten kann. Die zum Einpressen des rohrförmigen Elementes erforderlichen Kräfte werden von der Ringschulter 507 auf das Funktionselement 410 übertragen, diese drückt nämlich auf das in der Figur dargestellte obere Stirnende 410f des Funktionselements 410.

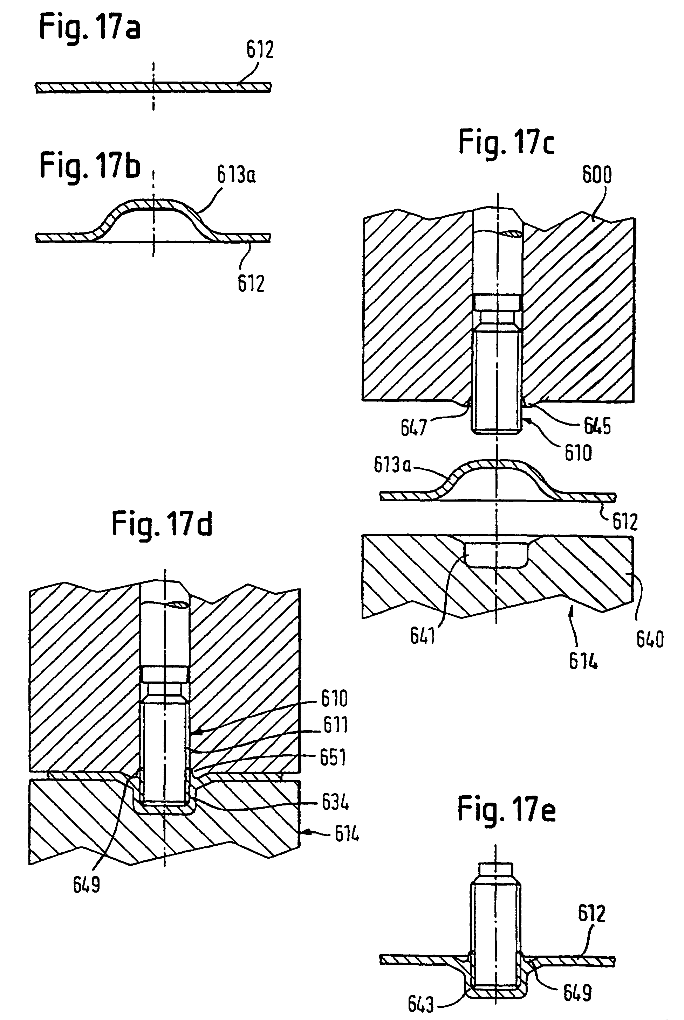

Schließlich zeigen die Fig. 17a bis 17e eine Möglichkeit, ein hier in Form eines Gewindestiftes vorliegendes zylindrisches Funktionselement mit einem Blechteil zu verbinden, ohne eine Matrize anwenden zu müssen, die bewegliche Formteile aufweist, was bei den bisherigen Ausführungsformen der Fall war. Der Gewindestift gemäß Fig. 17 ist mit dem Gewindestift der Fig. 5 identisch, weshalb für den Gewindestift das gleiche Bezugszeichen verwendet wird, jedoch um die Grundzahl 600 erhöht. Auf eine getrennte Beschreibung des Teils wird jedoch verzichtet, da die Beschreibung der Fig. 5 und die Beschreibung der hiermit verwandten Figuren auch hier gilt.

Es soll auch darauf hingewiesen werden, daß obwohl der Gewindestift 610 hier mit einem Gewindezylinder 611 versehen ist, auch ein stangenförmiges Element ohne Gewindezylinder zur Anwendung gelangen könnte, vor allem wenn diese radiale Vertiefungen oder Erhebungen entsprechend den Vertiefungen 21 des Elementes der Fig. 5 aufweist, so daß eine formschlüssige Verbindung mit dem Blechteil im Bereich dieser Vertiefungen bzw. Erhebungen erfolgt.

Fig. 17a zeigt das Blechteil 612 im Ausgangszustand. Das Blechteil wird zunächst einer Blechvorbereitung unterzogen, so daß es die Form gemäß Fig. 17b mit einer topfartigen Erhebung 613a aufweist. Unter Anwendung des Setzkopfes 600 der Fig. 17c und einer Matrize 640 mit einer topfartigen Vertiefung 641 gemäß Fig. 17c wird das untere Endes des Gewindestiftes 610 nunmehr mit dem Blechteil 612 formschlüssig verbunden. Aus Fig. 17c ist ersichtlich, daß die topfartige Vertiefung 641 in der Matrize 614 einen etwas kleineren Innendurchmesser aufweist als der äußere Durchmesser der topfartigen Erhebung 613a des Blechteils.

Bei Schließen der Presse bewegt sich der Setzkopf 600 nach unten. Das untere Stirnende des Gewindestiftes 610 drückt das Blechteil gegen die Matrize 614 und drückt eine nach unten gerichtete Vertiefung in die topfartige Erhöhung 613a hinein, so daß das Blechmaterial der topfartigen Erhebung 613a in die topfartige Vertiefung umgelegt wird und gleichzeitig an die zylindrische Außenwand des Gewindestiftes 610 gedrückt wird, so daß eine topfartige Vertiefung mit formschlüssiger Verbindung an dem Gewindestift entsteht, wie in den Fig. 17d und 17e bei 643 gezeigt ist.

Der Setzkopf 600 weist vorzugsweise auch eine ringförmige Nase 645, um den Gewindestift herum auf, mit einem ringförmigen, keilartigen Freiraum 647 zwischen der ringförmigen Nase 645 und dem Außendurchmesser des Gewindestiftes 610. Diese ringförmige Nase 645 resultiert, wie aus den Fig. 17d bzw. 17e ersichtlich ist, in eine entsprechende ringförmige Vertiefung 649 im Blechteil 12, um den Gewindestift herum, und führt, aufgrund der schräggestellten, radial inneren Fläche der Ringnase 645 zu einer innigen formschlüssigen Verbindung des Blechmaterials 651 mit dem Gewindestift radial innerhalb der ringförmigen Vertiefung 649, so daß in diesem Bereich in ringförmiger Kragen des Blechmaterials um den Gewindestift herum entsteht, der mit dem Gewindestift formschlüssig verbunden ist, d.h. die schräggestellte, radial innere Fläche der Ringnase 645 schiebt Metall radial nach innen während der Schließbewegung der Presse.

Die hier beschriebenen Funktionselemente können z.B. aus allen Materialien hergestellt werden, die die Festigkeitsklasse 5.6 erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, bspw. eine 35B2-Legierung gemäß DIN 1654. Die so gebildeten Befestigungselemente bzw. Mutterelemente eignen sich u.a. für alle handelsüblichen Stahlwerkstoffe für ziehfähige Blechteile wie auch für Aluminium oder deren Legierungen. Auch können Aluminiumlegierungen, insbesondere solche mit hoher Festigkeit für die Funktionselemente benutzt werden.

## Patentansprüche

1. Verfahren zur Anbringung eines eine Hinterschneidung (18, 218, 418) aufweisenden Funktionselementes (10, 210, 410), insbesondere eines Befestigungselementes, an einem Blechteil (12, 212, 412) ggf. in flüssigkeits- und/oder gasdichter Form, wobei das Funktionselement (10, 210, 410) gegen das durch eine Matrize (14, 114, 214, 414) abgestützte Blechteil (12, 212, 412) gepreßt wird, die wenigstens ein beweglich gelagertes Formteil (16, 116, 216, 416) aufweist,
**dadurch gekennzeichnet,**
**dass** Blechmaterial (13) mittels des beweglich gelagerten Formteils (16, 116, 216, 416) der Matrize (14, 114, 214, 414) bzw. der beweglichen Formteile der Matrize in die Hinterschneidung (18, 218, 418) des Funktionselementes (10, 210, 410) gedrückt wird, wobei zumindest ein Eingriffsabschnitt (20, 120, 220, 420) des Formteils (16, 116, 216, 416) zum Hineindrücken von Blechmaterial (13) in die Hinterschneidung (18, 218, 418) mit einer Radialkomponente senkrecht auf eine Längsachse (22, 122, 222, 422) der Matrize (14, 114, 214, 414) zu bewegt wird.

2. Verfahren nach Anspruch 1,
**dadurch gekennzeichnet,**
**daß** Blechmaterial (13) mittels des Formteils (16, 116) mit am Funktionselement (10) ausgebildeten, insbesondere nut- und/oder rippenartigen Verdrehsicherungsmerkmalen (21) in Eingriff gebracht wird.

3. Verfahren nach Anspruch 1 oder 2,
**dadurch gekennzeichnet,**
**daß** das Blechmaterial (13) erst in die Hinterschneidung (18, 218, 418) gedrückt und bevorzugt mit den Verdrehsicherungsmerkmalen (21) in Eingriff gebracht wird, nachdem das Blechteil (12, 212, 412) durch das zur Anbringung am Blechteil (12, 212, 412) in Richtung einer Längsachse (22, 122, 222, 422) der Matrize (14, 114, 214, 414) bewegte Funktionselement (10, 210, 410) zumindest teilweise umgeformt, insbesondere mit einer etwa kragen- oder topfförmigen Ausformung versehen worden ist.

4. Verfahren nach zumindest einem der vorhergehenden Ansprüche,
**dadurch gekennzeichnet,**
**daß** das Blechteil (12, 212) zumindest im Bereich des Funktionselementes (10, 210) bei dessen Anbringung am Blechteil (12, 212) entweder nicht perforiert oder nicht gelocht wird oder daß ein vorgelochtes Blechteil (412) verwendet wird, oder daß das Blechteil bei der Anbringung des Funktionselementes mittels eines selbststanzenden Funktionselementes oder eines vorlaufenden Lochstempels gelocht wird.

5. Verfahren nach zumindest einem der vorhergehenden Ansprüche,
**dadurch gekennzeichnet,**
**daß** das Formteil (16, 116, 216, 416) mittels des zur Anbringung am Blechteil (12, 212, 412) in Richtung einer Längsachse (22, 122, 222, 422) der Matrize (14, 114, 214, 414) bewegten Funktionselementes (10, 210, 410) bewegt wird, wobei beispielsweise entweder das Formteil (16) um eine bevorzugt etwa senkrecht zu einer Längsachse (22) der Matrize (14) verlaufende Drehachse (24) gedreht wird oder das Formteil (116, 216, 416) entlang einer Formfläche (26, 226, 426) bewegt wird, die in Bewegungsrichtung des Funktionselementes (10, 210, 410) während dessen Anbringung am Blechteil (12, 212, 412) auf eine Längsachse (122, 222, 422) der Matrize (114, 214, 414) zu verläuft.

6. Verfahren nach zumindest einem der vorhergehenden Ansprüche,
**dadurch gekennzeichnet,**
**daß** das Formteil (16, 216, 416) etwa senkrecht zu einer Längsachse (122, 222, 422) der Matrize verschoben wird.

7. Verfahren nach zumindest einem der vorhergehenden Ansprüche,
**dadurch gekennzeichnet,**
**daß** das Formteil (16, 116, 216, 416) gegen eine der Bewegung des Funktionselementes (10, 210, 410) in Richtung einer Längsachse (22, 122, 222, 422) der Matrize (14, 114, 214, 414) entgegenwirkende Kraft, insbesondere gegen die Rückstellkraft eines elastisch verformbaren Stützelementes (28, 128, 228, 428) für das Formteil (16, 116, 216, 416), bewegt wird.

8. Verfahren nach zumindest einem der vorhergehenden Ansprüche,
**dadurch gekennzeichnet,**
**daß** bei Verwendung eines eine beschichtete Oberfläche aufweisenden Blechteils (12, 212, 412) diese Oberfläche zumindest auf der dem Funktionselement (10, 210, 410) gegenüberliegenden Seite nicht beschädigt wird.

9. Matrize (14, 114, 214), insbesondere zur Verwendung in einem Verfahren nach zumindest einem der Ansprüche 1 bis 8, mit einem etwa topfförmigen Umformraum (30, 130, 230, 430), in den das Funktionselement (10, 210, 410), insbesondere ein Kopfteil (10a, 210a, 410a) des Funktionselementes (10), zum Umformen des Blechteils (12, 212, 412) einführbar ist und mit wenigstens einem beweglich gelagerten Formteil (16,116, 216, 416), das den Umformraum zumindest bereichsweise begrenzt,
**dadurch gekennzeichnet,**
**dass** das Formteil bzw. die Formteile zum Hineindrücken von Blechmaterial (13) in eine Hinterschneidung (18, 218, 418) eines ggf. flüssigkeits- und/oder gasdicht an einem Blechteil (12, 212, 412) anzubringenden Funktionselementes (10, 210, 410), insbesondere eines Befestigungselementes, durch eine Bewegung auf die Längsachse der Matrize zu während einer Schließbewegung der Matrize ausgebildet ist bzw. sind.

10. Matrize nach Anspruch 9,
**dadurch gekennzeichnet,**
**daß** das Formteil (16,116, 216, 416) gegen die Rückstellkraft eines Stützelementes (28, 128, 228, 428) bewegbar ist.

11. Matrize nach zumindest einem der Ansprüche 9 oder 10,
**dadurch gekennzeichnet,**
**daß** das Formteil (16) als drehbar gelagerter Hebel mit einem Eingriffsarm (16a), der bevorzugt im Bereich seines freien Endes einen Eingriffsabschnitt (20) zum Hineindrücken von Blechmaterial (13) in die Hinterschneidung (18) des Funktionselementes (10) aufweist, und mit einem durch das Funktionselement (10) direkt oder indirekt beaufschlagbaren Betätigungsarm (16b) ausgebildet ist, wobei der Eingriffsarm (16a) und der Betätigungsarm (16b) vorzugsweise etwa einen rechten Winkel einschließen, der Betätigungsarm (16b) vorzugsweise etwa senkrecht zu einer Längsachse (22) der Matrize (14) verläuft und zumindest bereichsweise einen Bodenabschnitt eines Umformraumes (30) bildet, wobei die Formteile vorzugsweise in Seitenansicht zumindest im wesentlichen rechtwinklig bzw. L-förmig und in Draufsicht kreissegmentartig mit einem spitzen Segmentwinkel ausgebildet sind und der Eingriffsarm (16a) wahlweise etwa parallel zu einer Längsachse (22) der Matrize (14) verläuft und zumindest bereichsweise einen Seitenwandabschnitt eines Umformraumes (30) bildet.

12. Matrize nach zumindest einem der Ansprüche 9 bis 11,
**dadurch gekennzeichnet,**
**daß** der Eingriffsabschnitt des Eingriffsarmes (16a) etwa in Höhe einer Auflagefläche (32) der Matrize (14) für das Blechteil (12) und bevorzugt als zumindest näherungsweise in Richtung einer Längsachse (22) der Matrize (14) weisender Vorsprung (20) ausgebildet ist.

13. Matrize nach zumindest einem der Ansprüche 9 bis 12,
**dadurch gekennzeichnet,**
**daß** die Drehachse (24) des Formteils (16) in einer senkrecht zu einer Längsachse (22) der Matrize (14) verlaufenden Ebene liegt, durch den Übergangsbereich zwischen dem Eingriffsarm (16a) und dem Betätigungsarm (16b) hindurch verläuft und einen radialen Abstand von der Längsachse (22) aufweist, wobei das Formteil (16) vorzugsweise im Bereich seiner Drehachse (24) in Richtung einer Längsachse (22) der Matrize (14) zumindest im wesentlichen unverschiebbar abgestützt ist, bspw. dadurch, daß ein Achsstummel (49) auf beiden Seiten jedes Formteils (16) im Übergangsbereich zwischen dem Eingriffsarm (16a) und dem Betätigungsarm (16b) angeordnet ist und die Achsstummel in Lageraufnahmen (51) der Matrize drehbar gelagert sind, die zwischen dem Körper (40) der Matrize (14) und einer Abdeckplatte (53) ausgebildet sind, und der Betätigungsarm (16b) vorzugsweise zumindest im Bereich seines freien, einer Längsachse (22) der Matrize (14) zugewandten Endes an einem elastisch verformbaren Stützelement (28) abgestützt ist.

14. Matrize nach zumindest einem der Ansprüche 9 bis 12,
**dadurch gekennzeichnet,**
**daß** das Formteil (116, 216, 416) insbesondere mit einer von einer Längsachse (122, 222, 422) der Matrize (114, 214, 414) abgewandten Außenfläche (17a, 217a, 417a) entlang einer Formfläche (26, 226, 426) der Matrize (114, 214, 414) bewegbar ist, die in Bewegungsrichtung des Funktionselementes (10, 210, 410) während dessen Anbringung am Blechteil (12, 212, 412) auf die Längsachse (122, 222, 422) der Matrize (114, 214, 414) zu und bevorzugt etwa parallel zur Außenfläche (17a, 217a, 417a) des Formteils (116, 216, 416) verläuft, wobei das Formteil (116, 216, 416) vorzugsweise mit einer bevorzugt etwa parallel zu einer Längsachse (122, 222, 422) der Matrize (114, 214, 414) verlaufenden, der Längsachse (122, 222, 422) der Matrize (114, 214, 414) zugewandten Innenfläche (17b, 217b, 417b) gegen ein bevorzugt etwa zylindrisches Anschlagelement (34, 234, 434) der Matrize (114, 214, 414) bewegbar ist, dessen Längsachse mit der Längsachse (122, 222, 422) der Matrize (114, 214, 414) etwa zusammenfällt, und das Formteil (116, 216, 416) vorzugsweise an einem elastisch verformbaren Stützelement (128, 228, 428) abgestützt ist.

15. Matrize nach zumindest einem der Ansprüche 9 bis 14,
**dadurch gekennzeichnet,**
**daß** mehrere, bevorzugt zwei bis acht, insbesondere drei oder sechs beweglich gelagerte, vorzugsweise im wesentlichen baugleiche Formteile (16, 116, 216, 416) um eine Längsachse (22, 122, 222, 422) der Matrize (14, 114, 214, 414) herum vorzugsweise gleichmäßig verteilt angeordnet sind, vorzugsweise daß das oder jedes Formteil (16, 116, 216, 416) in einer senkrecht zu einer Längsachse (22, 122, 222, 422) der Matrize (14, 114, 214, 414) verlaufenden Ebene zumindest näherungsweise den Querschnitt eines gleichschenkligen, insbesondere gleichseitigen Dreiecks aufweist, wobei bevorzugt die Formteile (16, 116, 216, 416) nach Art von Tortenstücken um die Längsachse (22, 122, 222, 422) der Matrize (14, 114, 214, 414), insbesondere um ein Anschlagelement (34, 234, 434) der Matrize (114, 214, 414), herum angeordnet sind, wobei das oder jedes Formteil (16, 116, 216, 416) vorzugsweise auswechselbar ausgebildet ist.

16. Matrize nach Anspruch 14 oder 15,
**dadurch gekennzeichnet,**
**daß** das Anschlagelement (234, 434) eine Ringschulter (280, 480) aufweist, auf der die Formteile (216, 416) an ihren dem Umformraum (230, 430) abgewandten Enden (278, 478) aufliegen und daß ein elastisches Rückstellelement (228, 428) das Anschlagelement (234, 434) und über die Ringschulter (280, 480) die Formteile (216, 416) in Richtung einer geöffneten Stellung der Matrize (214, 414) vorspannen, wobei die Kraft des elastischen Rückstellelementes (228, 428) vorzugsweise so gewählt ist, daß die Formteile (216, 416) aus der geöffneten Stellung der Matrize erst dann entlang der Formfläche (226, 426) der Matrize bewegbar sind, wenn eine das Funktionselement (210, 410) nach unten drückende Setzeinrichtung (310, 510) mit ihrer dem Blechteil (212, 412) zugewandten Stirnseite das Blechteil (212, 412) zwischen sich und die Formteile (216, 416) klemmt.

17. Matrize nach Anspruch 16,
**dadurch gekennzeichnet,**
**daß** die Formteile (216, 416) jeweilige, sich in Längsrichtung der Matrize (214, 414) erstreckende Ausnehmungen (288, 488) aufweisen, in denen in der Außenwand der Matrize fest angeordnete Stifte (286, 486) hineinragen und die geöffnete Stellung der Matrize (214, 414) dadurch definieren, daß sie die Bewegung der Formteile in die geöffneten Stellen begrenzen, wobei die axiale Länge der Ausnehmungen (288, 488) abzüglich der axialen Höhe der Stifte (286, 486) vorzugsweise zumindest im wesentlichen dem maximal vorgesehenen Hub der Formteile (216, 416) in axialer Richtung der Matrize (214, 414) entspricht und/oder die Breite der Ausnehmungen (288, 488) zu deren axialer Richtung dem Durchmesser der in diesen eindringenden Stifte (286, 486) entspricht.

18. Matrize nach einem der Ansprüche 14 bis 17,
**dadurch gekennzeichnet,**
**daß** die Formteile (116) in ihrer jeweiligen radial nach außen weisenden Seite eine in Bezug auf die Längsachse (122) der Matrize (114) schräggestellte Formnut (119) aufweisen, welche auf ein jeweilig komplementär gestaltetes Führungsprisma (117) gleitet, das im Körper (140b) der Matrize (114) angeordnet ist, wobei die entsprechend schräggestellten Flächen der Führungsprismen (117) in Richtung auf die Längsachse (122) zu und vom Blechteil weggehend konvergieren.

19. Verfahren nach Anspruch 1,
**dadurch gekennzeichnet,**
**dass** das Funktionselement (10) als insbesondere in einem Walzverfahren hergestellter Gewindestift (10) ausgebildet ist, der vorzugsweise zumindest im wesentlichen eine konstanten Außendurchmesser aufweist und im Bereich des Gewindes mit dem Blechteil verbunden wird, wobei eine oder mehrere Gewindegänge die Hinterschneidung bildet bzw. bilden.

20. Verfahren nach Anspruch 19,
**dadurch gekennzeichnet,**
**dass** zur Verdrehsicherung der Gewindestift beispielsweise an seiner im angebrachten Zustand dem Blechteil (12) zugewandten Unterseite (10c) mit insbesondere exzentrisch bezüglich seiner Längsachse (36) angeordneten Verdrehsicherungsmerkmalen (21) bevorzugt in Form einer oder mehrerer Vertiefungen und/oder Erhebungen versehen ist, in die bzw. an die Material des Blechteils ein- bzw.- in Anlage gebracht wird.

21. Verfahren nach Anspruch 19 oder 20,
**dadurch gekennzeichnet,**
**dass** der Gewindestift (10) an seiner Umfangswand mit insbesondere ein Gewinde (11) unterbrechenden Verdrehsicherungsmerkmalen (21) bevorzugt in Form einer oder mehrerer Vertiefungen und/oder Erhebungen versehen ist, in die bzw. an die Material des Blechteils ein- bzw. in Anlage gebracht wird.

22. Verfahren nach zumindest einem der Ansprüche 1 bis 8,
**dadurch gekennzeichnet,**
**dass** ein Funktionselement mit Gewinde benutzt wird, wobei das Funktionselement (10) mit dem Blechteil (12) im Bereich des Gewindes in einer durch dieses gebildeten Hinterschneidung (18) des Funktionselementes (10) durch umformtechnisches Fügen im wesentlichen formschlüssig verbunden oder verhakt ist.

23. Verfahren nach Anspruch 22,
**dadurch gekennzeichnet,**
**daß** das Blechteil (12) zumindest im Bereich des Funktionselementes (10) oder einer Fügeverbindung mit dem Funktionselement (10) im nicht perforierten oder nicht gelochten Zustand benutzt wird.

24. Verfahren nach Anspruch 22 oder 23,
**dadurch gekennzeichnet,**
**daß** bei Verwendung eines eine beschichtete Oberfläche aufweisenden Blechteils (12) diese Oberfläche zumindest auf der dem Funktionselement (10) gegenüberliegenden Seite durch das Anbringen des Funktionselementes (10) an dem Blechteil (12) nicht beschädigt wird.

25. Verfahren nach zumindest einem der Ansprüche 22 bis 24,
**dadurch gekennzeichnet,**
**daß** das Funktionselement (10), insbesondere ein Kopfteil (10a) des Funktionselementes (10), zumindest teilweise in einer topfartigen Vertiefung des Blechteils (12) angeordnet ist.

## Claims

1. Method of attaching a functional element (10, 210, 410) having an undercut (18, 218, 418), in particular a fastener element to a sheet metal part (12, 212, 412), optionally in liquid-tight and/or gas-tight manner, wherein the functional element (10, 210, 410) is pressed against a sheet metal part (12, 212, 412) supported on a die (14, 114, 214, 414) having at least one movably mounted shaped part (16, 116, 216, 416)
**characterized in that**
sheet metal material (13) is pressed by means of the movably mounted shaped part (16, 116, 216, 416) of the die (14, 114, 214, 414) into the undercut (18, 218, 418) of the functional element (10, 210, 410), with at least one engagement section (20, 120, 220, 420) of the shaped part (16, 116, 216, 416) being moved with a radial component perpendicular to a longitudinal axis (22, 122, 222, 422) of the die (14, 114, 214, 414) to press sheet metal material into the undercut (18, 218, 418).

2. Method in accordance with claim 1,
**characterized in that**
the sheet metal material (13) is brought by means of the shaped part (16, 116) into engagement with in particular groove and/or rib-like features (21) providing security against rotation formed on the functional element (10).

3. Method in accordance with claim 1 or claim 2,
**characterized in that**
the sheet metal material (13) is first pressed into the undercut (18, 218, 418) and preferably brought into engagement with the features (21) providing security against rotation after the sheet metal part (12, 212, 412) has been at least partly shaped by the movement of the functional element (10, 210, 410) in the direction of a longitudinal axis (22, 122, 222, 422) of the die (14, 114, 214, 414) for the attachment to the sheet metal part and has in particular been provided with an approximately collar-like or pot-like recess.

4. Method in accordance with at least one of the preceding claims,
**characterized in that**
the sheet metal part (12, 212) is either not perforated or holed, at least in the region of the functional element (10, 210, 410) on its attachment to the sheet metal part (12, 212), or **in that** the sheet metal part is holed during the attachment of the functional element by means of a self-piercing functional element or of a preceding hole punch.

5. Method in accordance with at least one of the preceding claims,
**characterized in that**
the shaped part (16, 116, 216, 416) is moved by means of the functional element (10, 210, 410) moved in the direction of a longitudinal axis (22, 122, 222, 422) of the die for the attachment to the sheet metal part (12, 212, 412), wherein the shaped part (16) is either rotated about an axis of rotation (24) extending preferably approximately perpendicular to a longitudinal axis (22) of the die button (14), or the shaped part (116, 216, 416) is moved along a shaped surface (26, 226, 426) which converges towards a longitudinal axis (112, 222, 422) of the die (114, 214, 414) in the direction of movement of the functional element (10, 210, 410) during its attachment to the sheet metal part (12, 212, 412).

6. Method in accordance with at least one of the preceding claims,
**characterized in that**
the shaped part (16, 216, 416) is shifted approximately perpendicular to a longitudinal axis (122, 222, 422) of the die.

7. Method in accordance with at least one of the preceding claims,
**characterized in that**
the shaped part (16, 116, 216, 416) is moved against a force counteracting the movement of the functional element (10, 210, 410) in the direction of a longitudinal axis (22, 122, 222, 422) of the die (14, 114, 214, 414), in particular against the resetting force of an elastically deformable support element (28, 128, 228, 428) for the shaped part (16, 116, 216, 416).

8. Method in accordance with at least one of the preceding claims,
**characterized in that**
when using a sheet metal part (12, 212, 412) having a coated surface, this surface is not damaged, at least at the side lying opposite to the functional element (10).

9. Die (14, 114, 214, 414), in particular for use in a method in accordance with at least one of the claims 1 to 8 having a somewhat pot-like forming space (30, 130, 230. 430) into which the functional element (10, 210, 410) and especially a head part (10a, 210a, 410a) of the functional element (10, 210, 410) can be introduced for the reshaping of the sheet metal part (12, 212, 412) and at least one movably mounted shaped part (16, 116, 216, 416) which at least regionally bounds the forming space,
**characterised in that**
the shaped part or parts is or are formed for the pressing of sheet metal material (13) into an undercut (18, 218, 418) of a functional element (10, 210, 410), in particular a fastener element, which is to be attached, in particular in liquid-tight and/or gas-tight manner, to a sheet metal part (12, 212, 412), by a movement towards the longitudinal axis of the die during a closing movement of the die.

10. Die in accordance with claim 9,
**characterized in that**
the shaped part (16, 116, 216, 416) is movable against the resetting force of a support element (28, 128, 228, 428).

11. Die in accordance with at least one of the claims 9 or 10,
**characterized in that**
the shaped part (16) is formed as a rotatably mounted lever with an engagement arm (16a) which preferably has an engagement section (20) in the region of its free end for the pressing of sheet metal material (13) into the undercut (18) of the functional element (10) and is formed with an actuating arm (16b) which is directly or indirectly loadable by the functional element (10), wherein the engagement arm (16a) and the actuating arm (16b) include an approximately right-angled angle, wherein the actuating arm (16b) extends approximately perpendicular to a longitudinal axis (22) of the die (14) and at least regionally forms a floor section of a shaping space (30), with the shaped parts (16) preferably being at least substantially right-angled or L-shaped in side view and being formed with a shape resembling a segment of a circle with an acute segment angle in plan view, and wherein the engagement arm (16a) optionally extends approximately parallel to a longitudinal axis (22) of the die (14) and at least regionally forms a side wall section of a shaping space (30).

12. Die in accordance with at least one of the claims 9 to 11,
**characterized in that**
the engagement section of the engagement arm (16a) lies approximately at the level of a support surface (32) of the die (14) for the sheet metal part (12) and is preferably formed as a projection (20) which points at least approximately in the direction of a longitudinal axis (22) of the die (14).

13. Die in accordance with at least one of the claims 9 to 12,
**characterized in that**
the axis of rotation (24) of the shaped part (16) lies in a plane extending perpendicular to a longitudinal axis (22) of the die (14) and through the transition region between the engagement arm (16a) and the actuating arm (16b) and has a radial spacing from the longitudinal axis (22), wherein the shaped part (16) is preferably at least substantially non-displaceably supported in the region of its axis of rotation (24) in the direction of a longitudinal axis (22) of the die (14), for example **in that** a stub axle (49) is provided on both sides of each shaped part (16) in the transition region between the engagement arm (16a) and the actuating arm (16 b) and the stub axles are pivotally journalled in bearing mounts (51) of the die which are formed between the body (40) of the die (14) and a cover plate (53), and wherein the actuating arm (16b) is supported at least in the region of its free end facing the longitudinal axis (22) of the die (14) on an elastically deformable support element (28).

14. Die in accordance with at least one of the claims 9 to 12,
**characterized in that** the shaped part (116, 216, 416) is movable, in particular with an outer surface (17a, 217a, 417a) of the shaped part (116, 216, 416), especially an outer surface facing away from the longitudinal axis (122, 222, 422) of the die (114, 214, 414), along a shaped surface (26, 226, 426) of the die (114, 214, 414) which extends in the direction of movement of the functional element (10, 210, 410) during its attachment to the sheet metal part (12, 212, 412) towards the longitudinal axis (122, 222, 422) of the die (114, 214, 414) and preferably extends approximately parallel to the outer surface (17a, 217a, 417a) of the shaped part (116, 216, 416), wherein the shaped part (116, 216, 416) is movable, preferably with inner surface (17b, 217b, 417b) extending preferably approximately parallel to a longitudinal axis (122, 222, 422) of the die (114, 214, 414) and facing the longitudinal axis (122, 222, 422) of the die (114, 214, 414) against a preferably somewhat cylindrical abutment element (34, 234, 434) of the die (114, 214, 414), the longitudinal axis of which coincides with the longitudinal axis (122, 222, 422) of the die (114, 214, 416), and wherein the shaped part (116, 216, 416) is preferably supported on an elastically deformable support element (128, 228, 428).

15. Die in accordance with at least one of the claims 9 to 14,
**characterized in that**
a plurality of movably mounted and preferably essentially identically designed shaped parts (16, 116, 216, 416), preferably from two to eight and especially three or six such movably mounted shaped parts are arranged distributed around a longitudinal axis (22,122, 222, 422) of the die (14, 114, 214, 414) and preferably uniformly distributed around it, preferably **in that** the or each shaped part (16, 116, 216, 416) has at least approximately the cross-section of an equilateral triangle in a plane extending perpendicular to a longitudinal axis (22, 122, 222, 422) of the die (14, 114, 214, 414), with the shaped parts (16, 116, 216, 416) preferably being arranged in the manner of pieces of cake around the longitudinal axis (22, 122, 222, 422) of the die (14, 114, 214, 414), especially around an abutment element (34, 234, 434) of the die (114, 214, 414) and wherein the or each shaped part (16, 116, 216, 416) is exchangeably designed.

16. Die in accordance with claim 14 or 15,
**characterized in that**
the abutment element (234, 434) has a ring shoulder (280, 480) contacted by the shaped parts (216, 416) at their ends (278, 478) remote from the shaping space (230, 430) and **in that** an elastic resetting element (228, 428) biases the abutment element (234, 434) and, via the ring shoulder (280, 480), the shaped parts (216, 416) in the direction of an open position of the die (214, 414), wherein the force of the elastic resetting element (228, 428) is preferably so selected that the shaped parts (216, 416) can first be moved out of the open position of the die along the shaped surface (226, 426) of the die when an end face of a setting device (310, 410) which presses the functional element (310, 410) downwardly clamps the sheet metal part (212, 414) between itself and the shaped parts (216, 416).

17. Die in accordance with claim 16,
**characterized in that**
the shaped parts (216, 416) have respective cut-outs (288, 488) extending in the longitudinal direction of the die (214, 414) into which pins (286, 486) fixedly arranged in the outer wall of the die project and define the open position of the die (214, 414) **in that** they restrict the movement of the shaped parts into the open positions, wherein the axial length of the cut-outs (288, 488) less the axial height of the pins (286, 486) corresponds at least substantially to the maximum stroke provided for the shaped parts (216, 416) in the axial direction of the die (214, 414) and/or wherein the width of the cut-outs (288, 488) to their axial direction corresponds to the diameter of the pins (286, 486) entering into them.

18. Die in accordance with one of the claims 14 to 17,
**characterized in that**
the shaped parts (116) have an inclined shaped groove (119) in their respective radially outwardly facing side, with the shaped groove sliding on a guide prism of complementary shape which is arranged in the body (140b) of the die (114), with the correspondingly inclined surfaces of the prisms (117) converging in the direction towards the longitudinal axis (122) moving away from the sheet metal part.

19. Method in accordance with claim 1,
**characterised in that**
the functional element (10) is formed as a threaded pin (10), in particular a threaded pin formed in a rolling process, the pin preferably having a substantially constant outer diameter and being connected to the sheet metal part in the region of the thread with one or more thread turns forming the undercut.

20. Method in accordance with claim 19,
**characterized in that**,
for security against rotation, the threaded pin is provided, e.g. at its lower side which confronts the sheet metal part (12) in the attached state, with features (21) providing security against rotation which are in particular arranged eccentrically relative to its longitudinal axis (36), preferably in the form of one or more recesses and/or raised portions into which or against which the material of the sheet metal part is brought into contact.

21. Method in accordance with claim 19 or 20,
**characterized in that**
the threaded pin (10) is provided at its peripheral wall with features (21) providing security against rotation and which in particular interrupt a thread (11), preferably features in the form of one or more recesses and/or raised portions into which or against which the material of the sheet metal part is brought into contact..

22. Method in accordance with at least one of the claims 1 to 8,
**characterised in that**
a functional element with a thread is used with the functional element (10) being connected or hooked in substantially form-fitted manner to the sheet metal part (12) in the region of an undercut (18) of the functional element (10) by a technical shaping and joining method.

23. Method in accordance with claim 22,
**characterized in that**
the sheet metal part (12) is used in a non-perforated or in a non-holed state at least in the region of a functional element (10) or in the region of a connection to the functional element (10).

24. Method in accordance with claim 22 or claim 23,
**characterized in that**
when using a sheet metal part (12) having a coated surface this surface is not damaged, at least at the side opposite to the functional element, by the attachment of the functional element (10) to the sheet metal part (12).

25. Method in accordance with at least one of the claims 22 to 24,
**characterized in that**
the functional element (10), and in particular a head part (10a) of the functional element (10) is at least partly arranged in a pot-like recess of the sheet metal part (12).

## Revendications

1. Procédé destiné à la fixation d'un élément fonctionnel (10, 210, 410) comportant une contre-dépouille (18, 218, 418), notamment d'un élément de fixation, sur une pièce de tôle (12, 212, 412), le cas échéant sous une forme étanche aux liquides et/ou aux gaz, l'élément fonctionnel (10, 210, 410) étant pressé contre la pièce de tôle (12, 212, 412) soutenue par une matrice (14, 114, 214, 414), cette dernière comportant au moins un élément de forme (16, 116, 216, 416) monté de façon mobile,
**caractérisé en ce que**
du matériau de tôle (13) est repoussé dans la contre-dépouille (18, 218, 418) de l'élément fonctionnel (10, 210, 410) au moyen de l'élément de forme (16, 116, 216, 416) monté de façon mobile de la matrice (14, 114, 214, 414) ou des éléments de forme mobiles de la matrice, étant précisé que, pour repousser du matériau de tôle (13) dans la contre-dépouille (18, 218, 418), au moins un tronçon d'attaque (20, 120, 220, 420) de l'élément de forme (16, 116, 216, 416) est déplacé perpendiculairement vers un axe longitudinal (22, 122, 222, 422) de la matrice (14, 114, 214, 414) par une composante radiale.

2. Procédé selon la revendication 1,
**caractérisé en ce que**,
au moyen de l'élément de forme (16, 116), du matériau de tôle (13) est mis en prise avec des empreintes de blocage en rotation (21), notamment de type rainure et/ou cannelure, agencées sur l'élément fonctionnel (10).

3. Procédé selon la revendication 1 ou 2,
**caractérisé en ce que**
le matériau de tôle (13) n'est repoussé dans la contre-dépouille (18, 218, 418), et est de préférence mis en prise avec les empreintes de blocage en rotation (21), qu'après que la pièce de tôle (12, 212, 412) a été déformée, au moins partiellement, notamment qu'elle a été munie d'une conformation en forme approximative de collerette ou de pot, par l'élément fonctionnel (10, 210, 410) se déplaçant en direction d'un axe longitudinal (22, 122, 222, 422) de la matrice (14, 114, 214, 414) pour la fixation sur la pièce de tôle (12, 212, 412).

4. Procédé selon l'une au moins des revendications précédentes,
**caractérisé en ce que**
la pièce de tôle (12, 212) n'est ni perforée, ni trouée, au moins dans la zone de l'élément fonctionnel (10, 210), lors de la fixation de celui-ci sur la pièce de tôle (12, 212), ou **en ce qu'**il est utilisé une pièce de tôle (412) préperforée, ou **en ce que**, lors de la fixation de l'élément fonctionnel, la pièce de tôle est perforée au moyen d'un élément fonctionnel autotaraudeur ou d'un poinçon de perforation se déplaçant en amont.

5. Procédé selon l'une au moins des revendications précédentes,
**caractérisé en ce que**
l'élément de forme (16, 116, 216, 416) est déplacé au moyen de l'élément fonctionnel (10, 210, 410) déplacé en direction d'un axe longitudinal (22, 122, 222, 422) de la matrice (14, 114, 214, 414) pour la fixation sur la pièce de tôle (12, 212, 412), soit l'élément de forme (16) est par exemple tourné autour d'un axe de rotation (24) s'étendant de préférence à peu près perpendiculairement à un axe longitudinal (22) de la matrice (14), soit l'élément de forme (116, 216, 416) est déplacé le long d'une surface de forme (26, 226, 426) qui, pendant la fixation de l'élément fonctionnel (10, 210, 410) sur la pièce de tôle (12, 212, 412), s'étend dans le sens de déplacement de celui-ci jusque sur un axe longitudinal (122, 222, 422) de la matrice (114, 214, 414).

6. Procédé selon l'une au moins des revendications précédentes,
**caractérisé en ce que**
l'élément de forme (16, 216, 416) est déplacé à peu près perpendiculairement par rapport à un axe longitudinal (122, 222, 422) de la matrice.

7. Procédé selon l'une au moins des revendications précédentes,
**caractérisé en ce que**
l'élément de forme (16, 116, 216, 416) est déplacé à l'opposé d'une force s'opposant au mouvement de l'élément fonctionnel (10, 210, 410) en direction d'un axe longitudinal (22, 122, 222, 422) de la matrice (14, 114, 214, 414), notamment à l'opposé d'une force de rappel d'un élément de soutien (28, 128, 228, 428) susceptible de se déformer élastiquement de l'élément de forme (16, 116, 216, 416).

8. Procédé selon l'une au moins des revendications précédentes,
**caractérisé en ce que**,
lors de l'utilisation d'une pièce de tôle (12, 212, 412) comportant une surface revêtue, cette surface n'est pas endommagée, au moins du côté opposé à l'élément fonctionnel (10, 210, 410).

9. Matrice (14, 114, 214), destinée notamment à être utilisée dans un procédé selon l'une au moins des revendications 1 à 8, comportant un espace de déformation (30, 130, 230, 430) approximativement en forme de pot, dans lequel l'élément fonctionnel (10, 210, 410), notamment un élément de tête (10a, 210a, 410a) de l'élément fonctionnel (10), peut être engagé pour la déformation de la pièce de tôle (12, 212, 412), et au moins un élément de forme (16, 116, 216, 416) monté de façon mobile, qui délimite l'espace de déformation, au moins par zones,
**caractérisée en ce que**,
pour repousser du matériau de tôle (13) dans une contre-dépouille (18, 218, 418) d'un élément fonctionnel (10, 210, 410), notamment d'un élément de fixation, à fixer le cas échéant de façon étanche aux liquides et/ou aux gaz sur une pièce de tôle (12, 212, 412), l'élément de forme ou les éléments de forme est (sont) agencé(s) afin de se déplacer jusque sur l'axe longitudinal de la matrice au cours d'un mouvement de fermeture de la matrice.

10. Matrice selon la revendication 9,
**caractérisée en ce que**
l'élément de forme (16, 116, 216, 416) peut être déplacé en s'opposant à la force de rappel d'un élément de soutien (28, 128, 228, 428).

11. Matrice selon l'une au moins des revendications 9 ou 10,
**caractérisée en ce que**
l'élément de forme (16) est agencé sous la forme d'un levier monté en rotation, avec un bras d'attaque (16a) comportant de préférence dans la zone de son extrémité libre un tronçon d'attaque (20) pour repousser du matériau de tôle (13) dans la contre-dépouille (18) de l'élément fonctionnel (10), et avec un bras d'actionnement (16b) sur lequel l'élément fonctionnel (10) peut agir directement ou indirectement, le bras d'attaque (16a) et le bras d'actionnement (16b) formant de préférence un angle approximativement droit, le bras d'actionnement (16b) s'étendant de préférence à peu près perpendiculairement par rapport à un axe longitudinal (22) de la matrice (14) et formant, au moins par zones, un tronçon de fond d'un espace de déformation (30), les éléments de forme étant de préférence agencés en vue latérale, au moins sensiblement, en forme d'angle droit ou de L, et en vue de dessus en forme de segments circulaires avec un angle de segment aigu, et le bras d'attaque (16a) s'étendant, au choix, à peu près parallèlement par rapport à un axe longitudinal (22) de la matrice (14) et formant, au moins par zones, un tronçon de paroi latérale d'un espace de déformation (30).

12. Matrice selon l'une au moins des revendications 9 à 11,
**caractérisée en ce que**,
approximativement à hauteur d'une surface d'appui (32) de la matrice (14) pour la pièce de tôle (12), le tronçon d'attaque du bras d'attaque (16a) est agencé sous la forme d'une saillie (20), qui est de préférence orientée, au moins approximativement, en direction d'un axe longitudinal (22) de la matrice (14).

13. Matrice selon l'une au moins des revendications 9 à 12,
**caractérisée en ce que** l'axe de rotation (24) de l'élément de forme (16) est situé dans un plan s'étendant perpendiculairement à un axe longitudinal (22) de la matrice (14), qu'il traverse la zone de transition entre le bras d'attaque (16a) et le bras d'actionnement (16b), et est espacé radialement de l'axe longitudinal (22), l'élément de forme (16) étant de préférence soutenu dans la zone de son axe de rotation (24), au moins pour l'essentiel en fixe, en direction d'un axe longitudinal (22) de la matrice (14), par exemple par le fait qu'un tourillon (49) est disposé des deux côtés de chaque élément de forme (16) dans la zone de transition entre le bras d'attaque (16a) et le bras d'actionnement (16b), et que les tourillons sont montés en rotation dans des logements de palier (51) de la matrice, qui sont formés entre le corps (40) de la matrice (14) et une plaque de recouvrement (53), et que le bras d'actionnement (16b) est de préférence supporté, au moins dans la zone de son extrémité libre orientée vers un axe longitudinal (22) de la matrice (14), par un élément de soutien (28) susceptible de se déformer élastiquement.

14. Matrice selon l'une au moins des revendications 9 à 12,
**caractérisée en ce que**
l'élément de forme (116, 216, 416) peut être déplacé le long d'une surface de forme (26, 226, 426) de la matrice (114, 214, 414), notamment par une surface extérieure (17a, 217a, 417a) opposée à un axe longitudinal (122, 222, 422) de la matrice (114, 214, 414) qui, pendant la fixation de l'élément fonctionnel (10, 210, 410) sur la pièce de tôle (12, 212, 412), s'étend dans le sens de déplacement de celui-ci vers l'axe longitudinal (122, 222, 422) de la matrice (114, 214, 414), et de préférence à peu près parallèlement par rapport à la surface extérieure (17a, 217a, 417a) de l'élément de forme (116, 216, 416), l'élément de forme (116, 216, 416) pouvant de préférence être déplacé, de préférence par une surface intérieure (17b, 217b, 417b) orientée vers l'axe longitudinal (122, 222, 422) de la matrice (114, 214, 414), s'étendant de préférence à peu près parallèlement par rapport à un axe longitudinal (122, 222, 422) de la matrice (114, 214, 414), contre un élément de butée (34, 234, 434) de préférence approximativement cylindrique de la matrice (114, 214, 414), dont l'axe longitudinal coïncide approximativement avec l'axe longitudinal (122, 222, 422) de la matrice (114, 214, 414), et l'élément de forme (116, 216, 416) étant de préférence soutenu par un élément de soutien (128, 228, 428) susceptible de se déformer élastiquement.

15. Matrice selon l'une au moins des revendications 9 à 14,
**caractérisée en ce que**
plusieurs éléments de forme (16, 116, 216, 416) montés de façon mobile, de préférence deux à huit, notamment trois ou six, de préférence de configuration sensiblement identique, sont disposés autour d'un axe longitudinal (22, 122, 222, 422) de la matrice (14, 114, 214, 414) en étant de préférence répartis de façon homogène, de préférence **en ce que** l'élément de forme ou chaque élément de forme (16, 116, 216, 416) présente dans un plan s'étendant perpendiculairement par rapport à un axe longitudinal (22, 122, 222, 422) de la matrice (14, 114, 214, 414), au moins approximativement, la section transversale d'un triangle isocèle, notamment équilatéral, les éléments de forme (16, 116, 216, 416) étant de préférence disposés comme des parts de tarte autour de l'axe longitudinal (22, 122, 222, 422) de la matrice (14, 114, 214, 414), notamment autour d'un élément de butée (34, 234, 434) de la matrice (114, 214, 414), l'élément de forme ou chaque élément de forme (16, 116, 216, 416) étant de préférence agencé de façon interchangeable.

16. Matrice selon la revendication 14 ou 15,
**caractérisée en ce que**
l'élément de butée (234, 434) comporte un épaulement annulaire (280, 480), sur lequel les éléments de forme (216, 416) prennent appui par leurs extrémités (278, 478) opposées à l'espace de déformation (230, 430), et **en ce qu'**un élément de rappel élastique (228, 428) précontraint l'élément de butée (234, 434), et par l'intermédiaire de l'épaulement annulaire (280, 480) les éléments de forme (216, 416), en direction d'une position ouverte de la matrice (214, 414), la force de l'élément de rappel élastique (228, 428) étant de préférence choisie de telle sorte que, à partir de la position ouverte de la matrice, les éléments de forme (216, 416) ne puissent se déplacer le long de la surface de forme (226, 426) de la matrice que lorsqu'un dispositif de pose (310, 510), qui repousse l'élément fonctionnel (210, 410) vers le bas, coince la pièce de tôle (212, 412) entre lui et les éléments de forme (216, 416) par sa face frontale orientée vers la pièce de tôle (212, 412).

17. Matrice selon la revendication 16,
**caractérisée en ce que**
les éléments de forme (216, 416) comportent respectivement des évidements (288, 488) qui s'étendent dans la direction longitudinale de la matrice (214, 414), dans lesquels s'engagent des broches (286, 486) disposées solidairement dans la paroi extérieure de la matrice, et qui définissent la position ouverte de la matrice (214, 414) en limitant le mouvement des éléments de forme dans la position ouverte, étant précisé que, déduction faite de la hauteur des broches (286, 486), la longueur axiale des évidements (288, 488) correspond, de préférence au moins pour l'essentiel, à la course maximale prévue des éléments de forme (216, 416) dans la direction axiale de la matrice (214, 414), et/ou la largeur des évidements (288, 488) correspond dans leur direction axiale au diamètre des broches (286, 486) qui s'y engagent.

18. Matrice selon l'une quelconque des revendications 14 à 17,
**caractérisée en ce que**,
dans leur face respective orientée radialement vers l'extérieur, les éléments de forme (116) comportent une rainure de forme (119) positionnée obliquement par rapport à l'axe longitudinal (122) de matrice (114), qui coulisse sur un prisme de guidage (117) agencé de façon complémentaire disposé dans le corps (140b) de la matrice (114), les surfaces inclinées en conséquence des prismes de guidage (117) convergeant en direction de l'axe longitudinal (122) et en s'écartant de la pièce de tôle.

19. Procédé selon la revendication 1,
**caractérisé en ce que**
l'élément fonctionnel (10) est agencé sous la forme d'une vis sans tête (10), fabriquée notamment par un procédé de roulage, qui comporte de préférence, au moins pour l'essentiel, un diamètre extérieur constant, et qui est reliée à la pièce de tôle dans la zone du filetage, un ou plusieurs pas de vis formant la contre-dépouille.

20. Procédé selon la revendication 19,
**caractérisé en ce que**,
pour le blocage en rotation, la vis sans tête comporte, par exemple sur sa face inférieure (10c) orientée à l'état fixé vers la pièce de tôle (12), des empreintes de blocage en rotation (21), qui sont notamment disposées de façon excentrée par rapport à son axe longitudinal (36), et sont de préférence agencées sous la forme d'un ou de plusieurs renfoncements et/ou surélévations, dans lesquels ou sur lesquels est mis en appui du matériau de la pièce de tôle.

21. Procédé selon la revendication 19 ou 20,
**caractérisé en ce que**,
sur sa paroi périphérique, la vis sans tête (10) est pourvue d'empreintes de blocage en rotation (21) interrompant notamment un filetage (11), de préférence sous la forme d'un ou de plusieurs renfoncements et/ou surélévations, dans lesquels ou sur lesquels est mis en appui du matériau de la pièce de tôle.

22. Procédé selon l'une au moins des revendications 1 à 8,
**caractérisé en ce que**
il est utilisé un élément fonctionnel avec un filetage, l'élément fonctionnel (10) étant relié ou agrafé à la pièce de tôle (12) dans la zone du filetage, sensiblement par complémentarité de formes, dans une contre-dépouille (18) de l'élément fonctionnel (10) formée par ce filetage, au moyen d'un assemblage par technique de déformation.

23. Procédé selon la revendication 22,
**caractérisé en ce que**,
la pièce de tôle (12) est utilisée à l'état non perforé ou à l'état non troué, au moins dans la zone de l'élément fonctionnel (10) ou d'une liaison par assemblage avec l'élément fonctionnel (10).

24. Procédé selon la revendication 22 ou 23,
**caractérisé en ce que**
lors de l'utilisation d'une pièce de tôle (12) comportant une surface revêtue, cette surface n'est pas endommagée par la fixation de l'élément fonctionnel (10) sur la pièce de tôle (12), au moins du côté opposé à l'élément fonctionnel (10).

25. Procédé selon l'une au moins des revendications 22 à 24,
**caractérisé en ce que**
l'élément fonctionnel (10), notamment un élément de tête (10a) de l'élément fonctionnel (10), est disposé, au moins partiellement, dans un renfoncement de type pot de la pièce de tôle (12).
